# EUROPÄISCHE PATENTANMELDUNG

(11) **EP 4 617 172 A1**
(43) Veröffentlichungstag der Anmeldung: **17.09.2025**
(21) Anmeldenummer: 25163293.1
(22) Anmeldetag: 12.03.2025
(51) Int. Cl.: B64D 1/12, B64D 1/10

(54) **FLUGDROHNEN-LIEFERTECHNIK**

(30) Priorität: 13.03.2024 DE 102024107157
(71) Anmelder: Newton Dynamics GmbH, 86153 Augsburg (DE)
(72) Erfinder: Riedel, Martin, 86165 Augsburg (DE); Papsdorf, Sören, 86356 Neusäß (DE)
(74) Vertreter: ERNICKE Patent- und Rechtsanwälte PartmbB

(57) **Zusammenfassung**

Die vorliegende Offenbarung betrifft eine Flugdrohnen-Liefertechnik, die mehrere Verfahrens- und Vorrichtungsaspekte umfasst, die einzeln oder in Kombination nutzbar sind. Es ist ein Absetzträger zur Beförderung von Fracht (2) mittels einer Flugdrohne (1) vorgeschlagen. Der Absetzträger (4) hat eine Stützstruktur (8) und eine Aufnahmepassage (6). Er ist dazu ausgebildet, mindestens ein Frachtstück (2) in der Aufnahmepassage (6) zu transportieren. Er kann von einer Flugdrohne (1) an einem Ziel-Ort mittels eines Zugmittels (11) abgelassen und auf einem Untergrund (15) abgesetzt werden. Der Absetzträger (4) ist dazu ausgebildet, im vorgesehenen Beladungszustand einen Frachtaufnahmekörper (3) in der Aufnahmepassage (6) aufzunehmen und relativ zu der Stützstruktur (8) zu fixieren. Der Frachtaufnahmekörper (3) verbleibt der Abgabe der Fracht (2) am Absetzträger (4). Das mindestens eine Frachtstück (2) ist von dem Frachtaufnahmekörper (3) in Horizontalrichtung (X, Y) umgeben und ausschließlich horizontal geführt. Der Absetzträger (4) weist einen nach unten weisenden vertikalen Zugang (7) zu der Aufnahmepassage (6) auf. Dieser vertikale Zugang (7) ist durch mindestens eine gesteuert bewegbare Bodenfläche (9) begrenzt. Ein Frachtabgabeverfahren sieht vor, dass die mindestens eine Bodenfläche (9) gesteuert in eine Öffnungsposition (OP1, OP2) bewegt wird, sodass mindestens ein innerhalb der Aufnahmepassage (6) angeordnetes Frachtstück (2) jegliche Schwerkraftabstützung verliert und durch den vertikalen Zugang (7) in Richtung des Untergrunds (15) aus der Aufnahmepassage (6) fällt. Auf diese Weise kann eine Frachtlieferung per Flugdrohnen vollständig ohne Einweg-Verpackungen und in einem effizienten sowie hoch automatisierbaren Prozess erzielt werden.

## Beschreibung

Die Erfindung liegt auf dem Gebiet des Transports von Fracht mit unbemannten Luftfahrzeugen (UAV - unmanned aerial vehicle / Flugdrohnen).

In der Praxis sind verschiedene Ansätze bekannt geworden, die Lieferung von Fracht mittels Flugdrohnen durchzuführen. Die bisher bekannten Techniken sind nicht optimal ausgebildet.

Es ist Aufgabe der vorliegenden Erfindung, eine verbesserte Flugdrohnen-Liefertechnik aufzuzeigen. Die Erfindung löst diese Aufgabe durch die Merkmale der eigenständigen Ansprüche.

Die Flugdrohnen-Liefertechnik gemäß der vorliegenden Offenbarung umfasst mehrere Aspekte, die für sich allein oder in Kombination einen Beitrag zur Lösung der erfindungsgemäßen Aufgabe leisten. Diese Aspekte umfassen zumindest einen Absetzträger, eine Dockingeinrichtung, einen Frachtaufnahmekörper, ein Transportvorbereitungsverfahren, ein Beladeverfahren, ein Flugtransportverfahren und ein Frachtabgabeverfahren.

Der Absetzträger ist dazu vorgesehen und ausgebildet, eine oder mehrere Fracht (Waren), insbesondere in einem zusätzlichen Aufnahmekörper vorpositionierte und (ausschließlich) horizontal geführte Fracht oder Frachtstücke, für einen Flugtransport handhabbar zu machen. Er kann insbesondere ein Flugtransport-Absetzträger oder ein Flugdrohnentransport-Absetzträger sein. Die Dockingeinrichtung ist dazu vorgesehen und ausgebildet, einen Lastenträger und weiter insbesondere einen Absetzträger für einen Flugtransport an einer Flugdrohne zu positionieren und/oder zu fixieren. Die Dockingeinrichtung kann insbesondere eine Absetzträger-Dockingeinrichtung sein. Der Frachtaufnahmekörper ist dafür vorgesehen und ausgebildet, eine oder mehrere Frachtstücke für einen Flugdrohnentransport vorab zu positionieren und (ausschließlich) horizontal zu führen. Er kann insbesondere ein Flugdrohnentransport-Frachtaufnahmekörper sein.

Die vorgenannten Aspekte können miteinander zur Bildung einer Flugdrohnen-Liefertechnik zusammenwirken, um einen vollständigen Warentransport ausgehend von einer Vorabpositionierung über eine Beladung, einen Transport bis hin zu einer Auslieferung zu unterstützen oder auszubilden. Sie wirken somit bevorzugt - aber nicht notwendigerweise - miteinander jeweils einzeln sowie in Gruppen zusammen.

Die Aspekte der vorliegenden Offenbarung können jeweils eigenständig oder in beliebiger Kombination verwendet werden, wobei durch die kombinierte Nutzung synergistische Effekte erzielbar sind. Der Absetzträger und die Dockingeinrichtung können gemeinsam eine Frachttransportvorrichtung bilden, insbesondere eine Flugdrohnen-Frachttransportvorrichtung. Die Flugdrohnen-Frachttransportvorrichtung kann als einen weiteren optionalen Bestandteil mindestens einen Frachtaufnahmekörper umfassen. Ferner umfasst die vorliegende Offenbarung eine Flugdrohne, die mit mindestens einem Element aus der Gruppe von Absetzträger und/oder Absetzträger-Dockingeinrichtung und/oder Frachtaufnahmekörper und/oder Frachttransportvorrichtung.

Die Flugdrohnen-Liefertechnik gemäß der vorliegenden Offenbarung ist dafür vorgesehen und geeignet, ein oder mehrere Frachtstücke an einem Start-Ort durch Beladung aufzunehmen, mittels einer Flugdrohne an mindestens einen Ziel-Ort zu transportieren und am Ziel-Ort zu entladen. Die ein oder mehreren Frachtstücke können bevorzugt vorab in einem Frachtaufnahmekörper vorpositioniert sein. Sie können weiterhin in einem Frachtaufnahmekörper (ausschließlich) in Horizontalrichtung geführt sein. Der Frachtaufnahmekörper verbleibt bevorzugt bei der Abgabe des mindestens einen Frachtstücks an dem Absetzträger.

Wesentliche Vorteile, die durch die vorliegende Technik und die Aspekte jeweils einzeln und/oder in Kombination erreicht werden, sind ein beschleunigter Frachttransport und/oder ein effizienterer Transport mittels einer Flugdrohne und/oder die Möglichkeit der Verminderung und insbesondere der vollständigen Vermeidung von Einweg-Verpackungen beim Flugdrohnen-Transport sowie das Ermöglichen eines hochautomatisierten Flugdrohnen-Transportvorgangs.

Die vorliegende Offenbarung betrifft somit eine Flugdrohnen-Liefertechnik, die mehrere Verfahrens- und Vorrichtungsaspekte umfasst, die einzeln oder in Kombination nutzbar sind. Nach einem ersten Aspekt ist ein Absetzträger zur Beförderung von Fracht mittels einer Flugdrohne vorgeschlagen. Der Absetzträger hat eine Stützstruktur und eine Aufnahmepassage. Er ist dazu ausgebildet, mindestens ein Frachtstück in der Aufnahmepassage zu transportieren. Er kann von einer Flugdrohne an einem Ziel-Ort mittels eines Zugmittels abgelassen und auf einem Untergrund abgesetzt werden. Der Absetzträger ist dazu ausgebildet, im vorgesehenen Beladungszustand einen Frachtaufnahmekörper in der Aufnahmepassage aufzunehmen und relativ zu der Stützstruktur zu fixieren, wobei das mindestens eine zu transportierende Frachtstück von dem Frachtaufnahmekörper vorpositioniert, beziehungsweise in Horizontalrichtung umgeben und geführt ist. Der Absetzträger verfügt über einen in Vertikalrichtung nach unten weisenden vertikalen Zugang zu der Aufnahmepassage. Dieser vertikale Zugang ist durch mindestens eine gesteuert bewegbare Bodenfläche begrenzt. Wenn die Bodenfläche in einer Schließposition ist, bedeckt sie den vertikalen Zugang. Hierdurch kann die Fracht (ein oder mehrere Frachtstücke) in der Vertikalrichtung nach unten abgestützt und in dem Absetzträger gehalten sein. Durch die Auslösung einer gesteuerten Bewegung der Bodenfläche in eine Öffnungsposition kann erzielt werden, dass mindestens ein innerhalb der Aufnahmepassage angeordnetes Frachtstück jegliche Schwerkraftabstützung verliert und durch den vertikalen Zugang in Richtung des Untergrunds aus der Aufnahmepassage fällt.

Ein Frachtabgabeverfahren gemäß der vorliegenden Offenbarung kann entsprechende Verfahrensschritte vorsehen, insbesondere dass die mindestens eine Bodenfläche gesteuert in eine Öffnungsposition bewegt wird, sodass mindestens ein innerhalb der Aufnahmepassage angeordnetes Frachtstück jegliche Schwerkraftabstützung verliert und durch den vertikalen Zugang in Richtung des Untergrunds aus der Aufnahmepassage fällt.

Durch die vorgenannten Aspekte kann eine Frachtlieferung per Flugdrohnen vollständig ohne Einweg-Verpackungen und in einem effizienten sowie hoch automatisierbaren Prozess erzielt werden.

Ein Aspekt der vorliegenden Erfindung sieht eine Frachttransportvorrichtung vor, die für die Lieferung von Waren mittels einer Flugdrohne vorgesehen und ausgebildet ist. Mit anderen Worten ist es eine Flugdrohnen-Frachttransportvorrichtung. Die Frachttransportvorrichtung umfasst eine Dockingeinrichtung mit einem Gehäuse. Die Dockingeinrichtung ist über eine Befestigungsschnittstelle mit der Flugdrohne verbindbar. Die Frachttransportvorrichtung umfasst weiterhin eine Hebevorrichtung und einen Lastenträger. Die Hebevorrichtung ist steuerbar und dazu ausgebildet, den Lastenträger mittels eines Zugmittels in einer Vertikalrichtung nach oben, d.h. in Richtung zu der Flugdrohne, anzuheben und in Vertikalrichtung nach unten abzulassen. Der Lastenträger umfasst eine Aufnahmepassage und ist dazu ausgebildet, mindestens ein Frachtstück durch eine Einschubbewegung in einer Horizontalrichtung in die Aufnahmepassage aufzunehmen, sowie das mindestens eine Frachtstück innerhalb der Aufnahmepassage in (mindestens) einer Horizontalrichtung zu positionieren und zu führen. Der Lastenträger ist weiter dazu ausgebildet, das mindestens eine Frachtstück in einer Vertikalrichtung nach unten aus der Aufnahmepassage freizugeben.

Der Absetzträger gemäß der vorliegenden Offenbarung kann eine spezielle Ausbildung des Lastenträgers sein. Der Absetzträger kann bevorzugt dazu ausgebildet sein, das mindestens eine Frachtstück derart in die Aufnahmepassage aufzunehmen, dass das mindestens eine Frachtstück in einem Frachtkompartiment eines Frachtaufnahmekörpers angeordnet und vorpositioniert ist. Der Frachtaufnahmekörper kann ein Transport-Hilfsmittel sein, das beliebig oft wiederverwendbar und durch Einstellung der Lage und/oder Größe des mindestens einen Frachtkompartiments auf unterschiedliche Arten und/der Anzahlen von Frachtstücken anpassbar ist.

Es kann eine Mehrzahl von Frachtaufnahmekörpern vorgesehen sein, die wechselweise in einem Absetzträger gemäß der vorliegenden Offenbarung aufnehmbar sind. Durch die Beladung und Entladung von Frachtstücken mittels eines Frachtaufnahmekörpers wird erreicht, dass die für einen bestimmten Liefervorgang vorgesehene Fracht (ein oder mehrere Frachtstücke) in dem mindestens einen Frachtkompartiment mit zeitlichem Abstand vor dem Drohnenflug vorbereitbar ist. Die Vorbereitung kann das Einbringen der gewünschten Anzahl und Art von Frachtstücken in dem Warentransportkörper umfassen sowie zusätzlich eine Optimierung der Frachtanordnung und Frachtfixierung für einen Drohnenflug.

Ein Transportvorgang mittels einer Flugdrohne kann besonders energieeffizient, sicher und schnell erfolgen, wenn die Ist-Lage des Gesamtschwerpunkts von Flugdrohne und Fracht einer Referenz-Lage entspricht. Diese Referenz-Lage sieht in der Regel vor, dass der Gesamtschwerpunkt auf einer in der Haupt-Flugrichtung orientierten Mittelebene der Flugdrohne angeordnet ist. Bevorzugt ist vorgesehen, dass nur geringe und insbesondere durch einen Querversatz-Grenzwert beschränkte Abweichungen der Ist-Lage des Gesamtschwerpunkts in einer horizontalen Querrichtung zugelassen sind. Die Querrichtung ist dabei bevorzugt in einer Horizontalrichtung und senkrecht zu einer Haupt-Flugrichtung orientiert. Andererseits kann bevorzugt vorgesehen sein, dass nur geringe und insbesondere durch einen Längsversatz-Grenzwert beschränkte Abweichungen der Ist-Lage des Gesamtschwerpunkts in einer horizontalen Längsrichtung zugelassen sind. Die Längsrichtung ist insbesondere entlang einer Haupt-Flugrichtung der Flugdrohne orientiert. Der Längsversatz-Grenzwert kann üblicherweise einen höheren Betrag haben als der Querversatz-Grenzwert.

Eine Flugdrohne hat in der Regel einen fixen Eigen-Schwerpunkt, sodass die Ist-Lage des Gesamtschwerpunktes im Wesentlichen durch die Lage und Fixierung der Fracht bestimmt ist. Je genauer und sicherer die Fracht hinsichtlich der Schwerpunktlage positioniert und fixiert werden kann, desto schneller und effizienter kann der Flugtransport erfolgen.

Durch die Vorbereitung der Fracht in einem Frachtaufnahmekörper, der erst nachfolgend in einen Lastenträger oder Absetzträger einer Flugdrohnen-Frachttransportvorrichtung aufgenommen wird, kann erreicht werden, dass die Lage und Fixierung der Fracht für den Flugdrohnentransport bereits bei der Einbringung der Fracht in die Flugdrohne in einer optimierten Weise vorgegeben wird.

Gemäß einem Aspekt der vorliegenden Offenbarung ist ein Frachtaufnahmekörper zur Beförderung eines oder mehrerer Frachtstücke vorgeschlagen. Der Frachtaufnahmekörper ist dafür vorgesehen und ausgebildet, die Fracht mittels einer Flugdrohne zu transportieren oder für den Flugdrohnentransport vorzubereiten. Es handelt sich somit um einen Flugdrohnentransport-Frachtaufnahmekörper.

Der Frachtaufnahmekörper gemäß der vorliegenden Offenbarung umfasst eine Rahmenstruktur, die dazu ausgebildet ist, den Frachtaufnahmekörper an einer externen Führungsstruktur festzulegen. Die externe Führungsstruktur kann beliebig ausgebildet sein. Sie ist bevorzugt an einer Flugdrohne oder einem Lastenträgern / Absetzträger ausgebildet.

Der Frachtaufnahmekörper umfasst mindestens ein Frachtkompartiment, in dem mindestens ein Frachtstück aufnehmbar ist. Der Frachtaufnahmekörper umfasst bevorzugt mehrere Frachtkompartimente. In einem Frachtkompartiment können ein, zwei oder mehr Frachtstücke aufnehmbar sein. Bevorzugt ist die Größe eines Frachtkompartiment gemäß einer horizontalen Erstreckung eines einzelnen Frachtstücks einstellbar. Es ist weiter bevorzugt, dass mindestens zwei nebeneinander anzuordnende Frachtstücke jeweils in eigenen Frachtkompartimenten eingebracht werden. Mit anderen Worten ist ein Frachtkompartiment ausschließlich für eine Einzel-Anordnung eines Frachtstücks ausgebildet, oder für eine ausschließlich in Vertikalrichtung gestapelte Anordnung von zwei oder mehr Frachtstücken. Hingegen erfolgt bevorzugt keine horizontal benachbarte Anordnung von zwei oder mehr Frachtstücken innerhalb eines Frachtkompartiments.

Der Frachtaufnahmekörper gemäß einem Aspekt der vorliegenden Offenbarung sieht vor, dass das mindestens eine Frachtkompartiment in einer horizontalen Erstreckung und/oder in seiner horizontalen Lage relativ zu der Rahmenstruktur des Frachtaufnahmekörpers einstellbar ist. Die Einstellbarkeit ist bevorzugt derart, dass eine Abweichung der Ist-Schwerpunktlage der Fracht gegenüber einer Referenz-Schwerpunktlage justierbar ist.

Der Frachtaufnahmekörper ist bevorzugt derart ausgebildet, dass eine Justierbarkeit vorgesehen ist: für die Ist-Schwerpunktlage mindestens eines (einzelnen) Frachtstücks und/oder für die Ist-Schwerpunktlage mindestens einer Gruppe von Frachtstücken und/oder für die Ist-Schwerpunktlage der Fracht insgesamt.

Der Flugdrohnentransport kann vorsehen, dass mindestens ein erstes Frachtstück in dem Frachtaufnahmekörper zu einem ersten Ziel-Ort und mindestens ein zweites Frachtstück zu einem zweiten Ziel-Ort zu befördern ist. Somit kann eine erste zu erwartende Flugphase vorliegen, in welcher eine Beladung der Flugdrohne mit dem mindestens einen ersten Frachtstück UND dem mindestens einen zweiten Frachtstück vorliegt, und eine zweite Flugphase, in welcher eine Beladung nur (noch) mit dem mindestens einen ersten Frachtstück ODER dem mindestens einen zweiten Frachtstück vorliegt.

Der Frachtaufnahmekörper gemäß der vorliegenden Offenbarung umfasst bevorzugt mindestens ein erstes Frachtkompartiment und mindestens ein zweites Frachtkompartiment. Das mindestens eine erste Frachtkompartiment ist in seiner horizontalen Erstreckung und/oder in seiner horizontalen Lage relativ zu der Rahmenstruktur einstellbar und fixierbar und das mindestens eine zweite Frachtkompartiment ist in seiner horizontalen Erstreckung und/oder in seiner horizontalen Lage relativ zu der Rahmenstruktur einstellbar und fixierbar. Mit anderen Worten sind bevorzugt zwei oder mehr Frachtkompartimente jeweils separat oder in Gruppen in deren horizontalen Erstreckung und/oder in deren horizontalen Lage relativ zu der Rahmenstruktur einstellbar und fixierbar.

Die Einstellung und Fixierung der Frachtkompartimente kann bevorzugt derart ermöglicht sein, dass eine zwei- oder mehrfache Schwerpunktlagen-Optimierung erfolgt, wobei insbesondere die Ist-Schwerpunktlage der Gesamtfracht justierbar ist, und weiterhin die Ist-Schwerpunktlage (mindestens) einer Teilfracht justierbar ist. Die Schwerpunktlagen-Optimierung kann dabei für die Gesamtfracht durch Justierung gegenüber einer ersten Referenz-Schwerpunktlage und für (mindestens) eine Teilfracht gegenüber (mindestens) einer weiteren Referenz-Schwerpunktlage erfolgen, wobei die erste Referenz-Schwerpunktlage und die (mindestens eine) weitere Referenz-Schwerpunktlage gleich oder unterschiedlich sein können. Die Gesamtfracht kann mindestens ein erstes UND mindestens ein zweites Frachtstück umfassen, während die Teilfacht nur (noch) mindestens ein erstes ODER mindestens ein zweites Frachtstück umfasst. Mit anderen Worten kann die Einstellung und Fixierung der Frachtkompartimente bevorzugt derart vorgesehen sein, dass eine erste Schwerpunktlagen-Optimierung für die Gesamtfracht und eine weitere Schwerpunktlagen-Optimierung für eine Teilfracht ermöglicht ist, wobei die Gesamtfracht und die Teilfacht die zu erwartende Beladung mit Frachtstücken in mindestens zwei Flugphasen eines Flugdrohnen-Liefervorgangs ist.

Im Rahmen der vorliegenden Offenbarung ist es bevorzugt, dass ein Frachtaufnahmekörper in einer Horizontalrichtung in die Aufnahmepassage eines Absetzträgers oder Lastenträgers eingebracht wird. Mit anderen Worten ist die Aufnahmerichtung, in der die Frachtaufnahme in den Absetzträger erfolgt, in einer Horizontalrichtung orientiert. Es sind jedoch auch Ausführungsformen erfasst, in denen eine andere Orientierung der Aufnahmerichtung vorgesehen ist, beispielsweise in einer Vertikalrichtung von oben oder von unten.

Nachfolgend werden weitere Vorrichtungs- und Verfahrensaspekte der vorliegenden Offenbarung und einige vorteilhafte Weiterbildungen und Ausführungen erläutert.

Die Erfindung ist in den Zeichnungen beispielhaft und schematisch dargestellt. Diese zeigen:
- Figur 1:: Eine Schrägbilddarstellung einer Flugdrohne mit einer Dockingeinrichtung - aus einer Sicht von schräg unten;
- Figur 2:: Eine Schrägbilddarstellung eines Absetzträgers und eines Frachtaufnahmekörpers mit zwei Frachtstücken - aus einer Sicht von schräg oben;
- Figur 3 und 4:: eine bevorzugte Ausführung einer Flugdrohne gemäß der vorliegenden Offenbarung;
- Figur 5:: eine bevorzugte Ausführung eines Frachtaufnahmekörpers und eines Absetzträgers;
- Figur 6:: eine weitere bevorzugte Ausführung eines Absetzträgers;
- Figur 7 und 8:: Erläuterungsdarstellungen für eine mögliche Beladung eines Absetzträgers mit einem Frachtaufnahmekörper durch eine Person;
- Figur 9-12:: Schrägbilddarstellungen zur Erläuterung eines Flugtransportverfahrens und eines Frachtabgabeverfahrens gemäß der vorliegenden Offenbarung;
- Figur 13-16:: Beispiele für mögliche Ausführungsarten von Verschlusskörpern mit einer oder mehreren Bodenflächen an einem Absetzträger;
- Figur 17-20:: Erläuterungsdarstellungen für eine erste Ausbildungsart eines Absetzträgers;
- Figur 21:: Erläuterungsdarstellung einer abgewandelten Ausbildungsart des Absetzträgers von Figuren 17-20;
- Figur 22-23:: Erläuterungsdarstellungen einer weiteren Ausbildungsform eines Absetzträgers;
- Figur 24-26:: Ablaufdarstellungen mit Zuständen eines Absetzträgers während einer Beladung, eines Flugtransports, einer Frachtabgabe und einer erneuten Beladung;
- Figur 27-29:: verschiedene Zustände eines Absetzträgers mit Anordnung mindestens einer Bodenfläche in einer Schließposition, in einer ersten Öffnungsposition und in einer weiteren Öffnungsposition;
- Figur 30:: Ablaufdiagramm mit Erläuterung der Beladung während unterschiedlichen Phasen eines Frachtliefervorgangs;
- Figur 31:: Erläuterungsdarstellung einer alternativen Ausführung eines Absetzträgers.

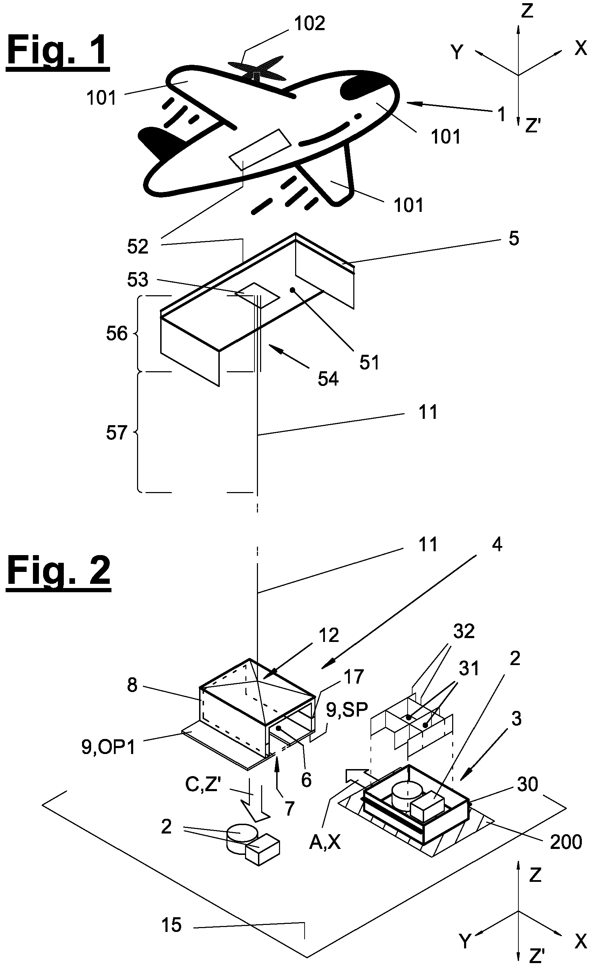

Figur 1 zeigt eine beispielhafte Ausbildung einer Flugdrohne 1 mit einer Dockingeinrichtung 5. Die Dockingeinrichtung 5 ist über ein Zugmittel 11 mit einem Absetzträger 4 verbindbar oder verbunden, der in Figur 2 dargestellt ist.

Der Absetzträger 4 ist zur Beförderung von Fracht 2 mittels der Flugdrohne 1 ausgebildet. Er hat eine Stützstruktur 8 und eine Aufnahmepassage 6. Die Stützstruktur 8 kann durch einen beliebigen steifen Körper ausgebildet sein, beispielsweise durch einen Rahmen und/oder ein Gehäuse. Die Fracht 2 kann aus einem oder mehreren Frachtstücken 2 bestehen. Bevorzugt sind mindestens zwei Frachtstücke und insbesondere drei, vier, fünf oder eine Vielzahl von Frachtstücken in der Aufnahmepassage 6 transportierbar.

Die Aufnahmepassage 6 kann eine beliebige Formgebung haben. Sie kann bevorzugt eine entlang einer Horizontalrichtung X gleichförmige Querschnittsform haben. Die Aufnahmepassage 6 ist bevorzugt (über die gesamte Querschnittsfläche) durchgängig und/oder entlang einer Horizontalrichtung X frei von Störkonturen. Die Aufnahmepassage 6 kann sich gemäß einer bevorzugten Ausführung bis zu mindestens einer horizontalen Außenkontur des Absetzträgers 6 erstrecken, weiter bevorzugt zwischen zwei einander gegenüberliegenden Außenkonturen des Absetzträgers erstrecken.

Die Aufnahmepassage 6 kann sich bevorzugt zwischen zwei horizontalen Zugängen 16, 16' erstrecken, die auf zwei horizontalen Außenseiten des Absetzträgers 4 gebildet sind.

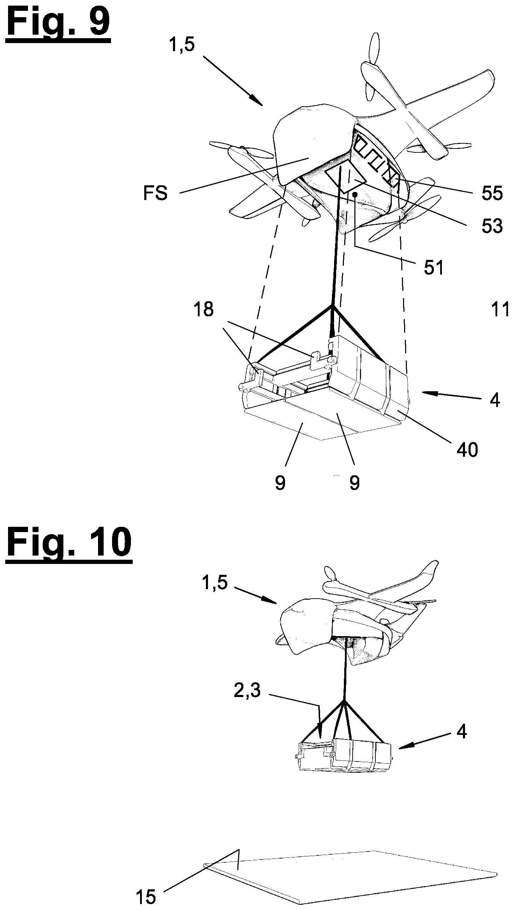

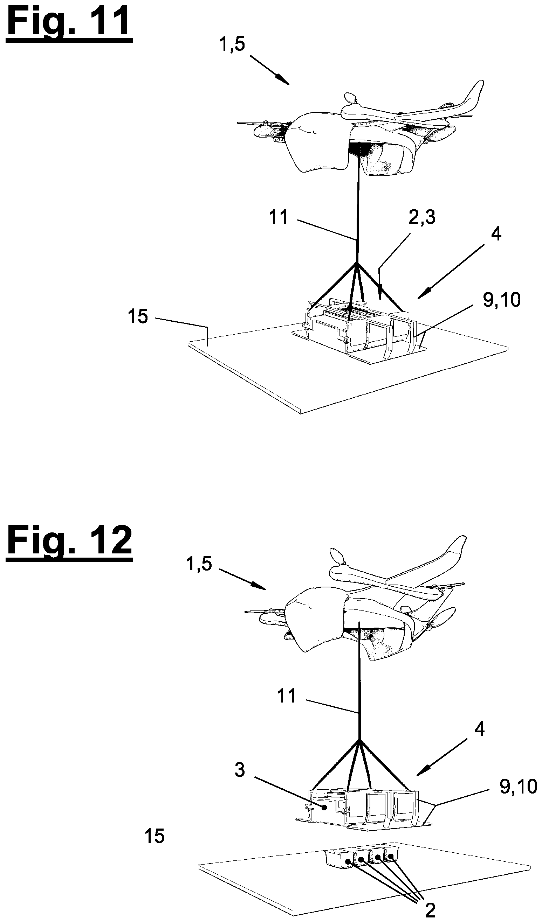

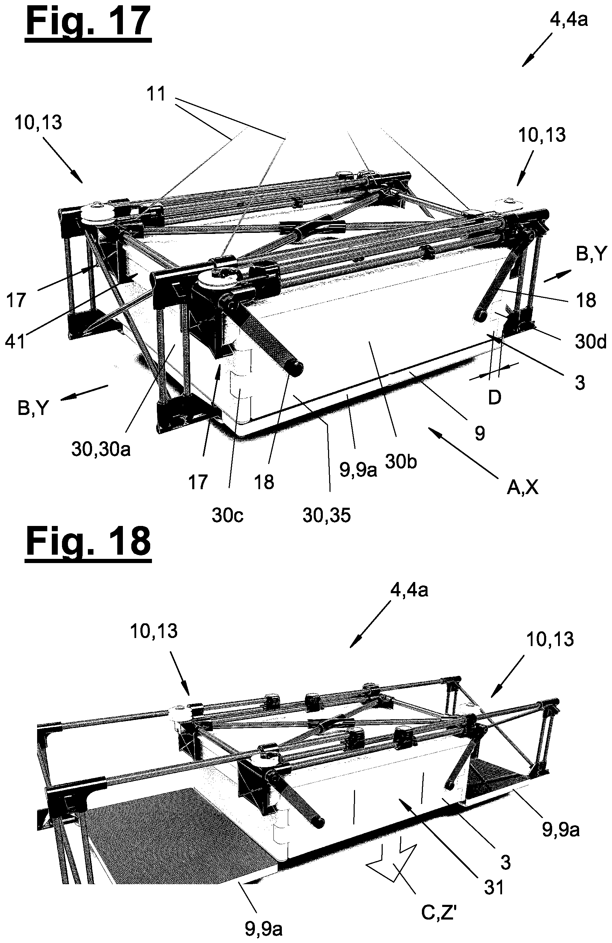

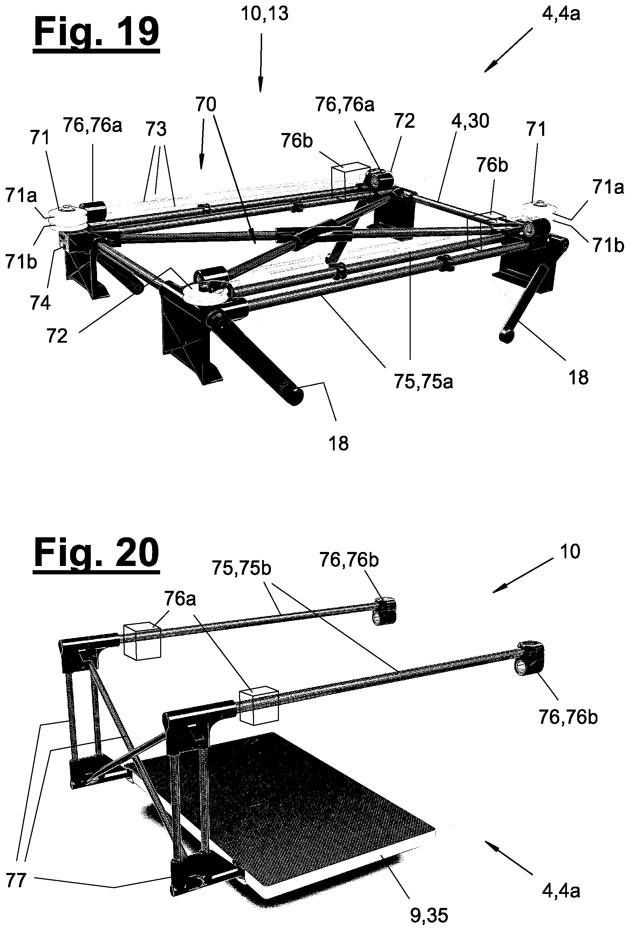

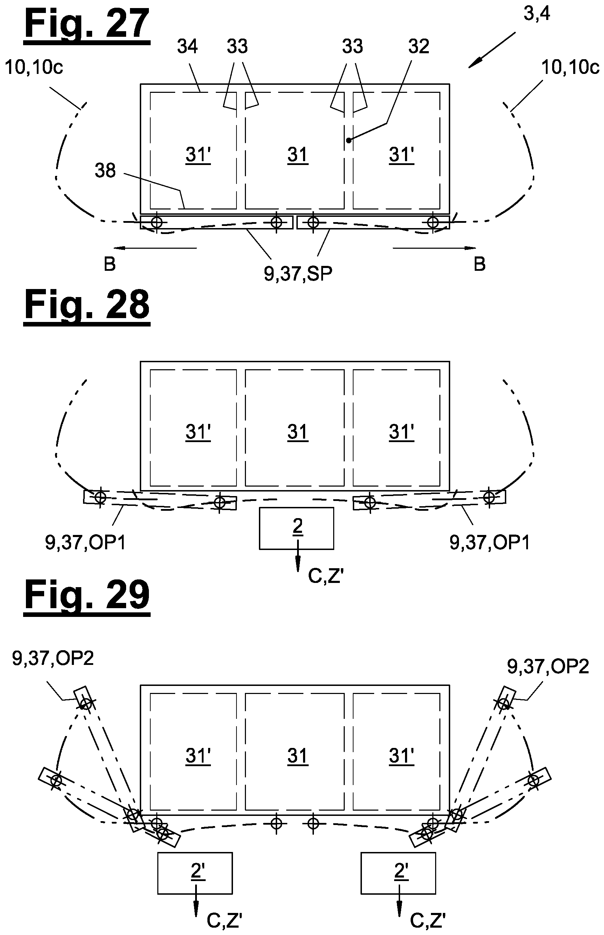

Mindestens eine Querseite der Aufnahmepassage 6 kann anteilig oder vollständig bedeckt oder verkleidet sein. Mit anderen Worten umfasst der Absetzträger 6 bevorzugt eine Hüllwandung oder eine Verkleidung 40. Die Hüllwandung oder Verkleidung 40 kann bevorzugt mindestens eine, mindestens zwei oder mehr Seiten der Aufnahmepassage bedecken, wobei die bedeckten Seiten bevorzugt schräg oder quer zu einem horizontalen Zugang 16, 16' orientiert sind. Die Hüllwandung oder Verkleidung 40 kann auch eine in Vertikalrichtung Z nach oben weisende Seite der Aufnahmepassage 6 teilweise oder vollständig bedecken. Figuren 2 bis 12 zeigen beispielhafte Ausbildungen eines Absetzträgers 4 mit einer Verkleidung 40, die zumindest zwei quer zu den horizontalen Zugängen 16, 16' orientierte Seitenflächen der Aufnahmepassage 6 bedecken. Figuren 27 bis 29 zeigen beispielhaft eine Ausführung, bei der auch eine in Vertikalrichtung Z nach oben gerichtete Seite der Aufnahmepassage 6 bedeckt ist. Die Figuren 17 bis 26 zeigen Ausführungen ohne Hüllwandung. Die Merkmale dieser Ausführungen sind beliebig kombinierbar und nicht beschränkend. Es sind beliebige andere Ausbildungen einer Hüllwandung oder Verkleidung möglich.

Eine Hüllwandung oder Verkleidung 40 kann isolierend sein, insbesondere thermisch isolierend und/oder elektrostatisch isolierend. Hierauf wird weiter unten noch ergänzend eingegangen.

Der Absetzträger 4 ist dazu ausgebildet, mindestens ein Frachtstück 2 in der Aufnahmepassage 6 zu transportieren. Der Absetzträger 4 kann ein Zugmittel 11 umfassen und/oder eine Zugmittelbefestigung 12 zur Verbindung mit einem externen Zugmittel 11 aufweisen. Das Zugmittel 11 kann auch ein Bestandteil der Dockingeinrichtung 5 und/oder der Flugdrohne 1 sein.

Gemäß der vorliegenden Offenbarung ist der Absetzträger 4 dazu ausgebildet, im vorgesehenen Beladungszustand einen (externen) Frachtaufnahmekörper 3 in der Aufnahmepassage 6 aufzunehmen und relativ zu der Stützstruktur 8 zu fixieren, wobei das mindestens eine Frachtstück 2 von dem Frachtaufnahmekörper 3 in Horizontalrichtung X, Y umgeben und geführt ist.

Weiter bevorzugt ist das mindestens eine Frachtstück 2 von dem Fachaufnahmekörper 3 im vorgesehenen Beladungszustand ausschließlich in Horizontalrichtung X, Y umgeben und geführt, jedoch insbesondere nicht in Vertikalrichtung nach unten Z' von dem Frachtaufnahmekörper 3 abgestützt. Gemäß einer alternativen Ausführung ist das mindestens eine Frachtstück in der Vertikalrichtung nach unten Z' im vorgesehenen Beladungszustand nur temporär durch einen Bodenbegrenzungskörper 37 des Frachtaufnahmekörpers 3 abgestützt, wobei weiterhin bevorzugt der Absetzträger 4 dazu ausgebildet ist, den Bodenbegrenzungskörper 37 des Frachtaufnahmekörpers 3 gesteuert zu bewegen.

Im Weiteren wird davon ausgegangen, sofern nicht anders angegeben, dass das mindestens eine Frachtstück 2 durch den Frachtaufnahmekörper drei in Vertikalrichtung nach unten Z' nicht abgestützt ist. Mit anderen Worten ist der Frachtaufnahmekörper 3 für die Fracht 2 vertikalabstützungsfrei.

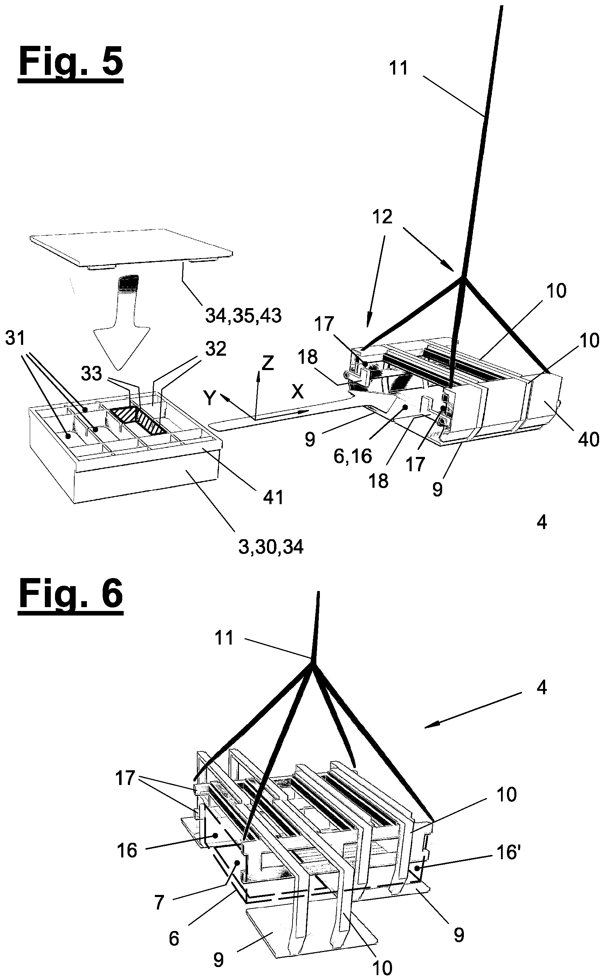

Der Frachtaufnahmekörper 3 kann eine beliebige Ausbildung haben. Er kann bevorzugt mindestens ein erstes Frachtkompartiment 31 und mindestens ein zweites Frachtkompartiment 31' umfassen. Die Frachtkompartimente 31, 31' sind bevorzugt in der Horizontalebene X, Y verteilt angeordnet. Sie können zueinander direkt benachbart sein oder untereinander auf Abstand gesetzt sein. Figuren 5 sowie 27 bis 29 zeigen beispielhafte Ausbildungen eines Frachtaufnahmekörpers 3 mit einer Mehrzahl an ersten und zweiten Frachtkompartimenten 31, 31'. Auf diese wird weiter unten ergänzend eingegangen.

Der Absetzträger 4 gemäß der vorliegenden Offenbarung weist bevorzugt einen nach unten weisenden vertikalen Zugang 7 zu der Aufnahmepassage 6 auf. Der vertikale Zugang 7 ist durch mindestens eine gesteuert belegbare Bodenfläche 9 begrenzt. Der vertikale Zugang 7 kann somit auch ein Zugang zu dem mindestens einen Frachtkompartiment 31, 31' des Frachtaufnahmekörpers 3 sein, insbesondere zu mindestens einem ersten Frachtkompartiment 31 und zu mindestens einem zweiten Frachtkompartiment 31'.

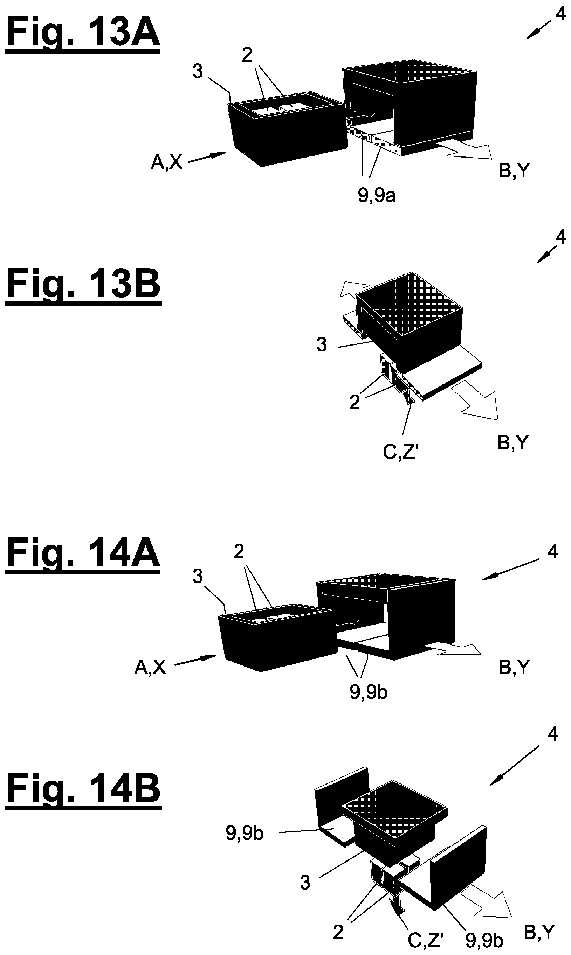

Der vertikale Zugang 7 kann bevorzugt durch zwei, drei, vier oder eine andere Mehrzahl an gesteuert bewegbaren Bodenflächen 9 begrenzt sein. Die zwei oder mehr Bodenflächen 9 können insbesondere in einer Horizontalrichtung X, Y zueinander benachbart sein. Die Öffnungsrichtung B der ein oder mehreren Bodenflächen 9 ist bevorzugt in einer Horizontalrichtung X, Y, wofür in den Figuren 13 bis 16 verschiedene Ausführungsarten beispielshaft gezeigt sind, auf die weiter unten ergänzend eingegangen wird.

Der Absetzträger 4 kann weiter bevorzugt zwei oder mehr gesteuert bewegbare Bodenflächen 9 aufweisen, die jeweils einzeln oder in Gruppen gesteuert bewegbar sind. Die einzelne oder gruppenweise Steuerung der mehreren Bodenflächen 9 kann insbesondere derart erfolgen, dass selektiv nur ein Teil der in der Aufnahmepassage 6 aufgenommenen Frachtstücke 2 in der Vertikalrichtung nach unten Z' durch eine oder mehrere Bodenflächen 9 abstützbar oder freigebbar ist.

Die mindestens eine Bodenfläche 9, insbesondere jede Bodenfläche 9, ist bevorzugt zwischen einer Schließposition SP und mindestens einer Öffnungsposition OP1, OP2 bewegbar. Eine erste Schließposition OP1 kann derart gewählt sein, dass mindestens ein erstes Frachtkompartiment 31 in der Vertikalrichtung nach unten Z' an dem Frachtaufnahmekörper 3 freigegeben wird, während mindestens ein zweites Frachtkompartiment 31' abgedeckt ist. Eine weitere Öffnungsposition OP2 kann derart gewählt sein, dass mindestens ein weiteres Frachtkompartiment 31' freigegeben wird. Es können eine, zwei oder mehr Öffnungspositionen definiert sein. Die Definition oder Auswahl einer Öffnungsposition OP1, OP2 erfolgt bevorzugt basierend auf einem momentan an dem Absetzträger 4 aufgenommenen Frachtaufnahmekörper 3, weiter insbesondere basierend auf einer momentanen Anordnung und Größe des mindestens einen Frachtkompartiments 31, 31'. Mit anderen Worten erfolgt die gesteuerte Bewegung der mindestens einen Bodenfläche 9 bevorzugt in Abhängigkeit von einer momentanen Konfiguration des Frachtaufnahmekörpers und/oder in Abhängigkeit von einer momentanen Verteilung der Fracht, insbesondere mehrerer Frachtstücke 2, auf die Frachtkompartimente 31, 31'.

Ein Frachtkompartiment 31, 31' und insbesondere jedes Frachtkompartiment 31, 31' weist bevorzugt eine horizontale Begrenzung 33 auf. Diese ist beispielhaft in Figuren 5 und 27 dargestellt. Die horizontale Begrenzung 33 kann bevorzugt ein Frachtkompartiment 31, 31' in der Horizontalebene X, Y ringförmig umschließen. Die horizontale Begrenzung 33 kann auf beliebige Weise gebildet sein. Sie ist bevorzugt in ihrer Anordnung veränderlich und zumindest zeitweise fixierbar.

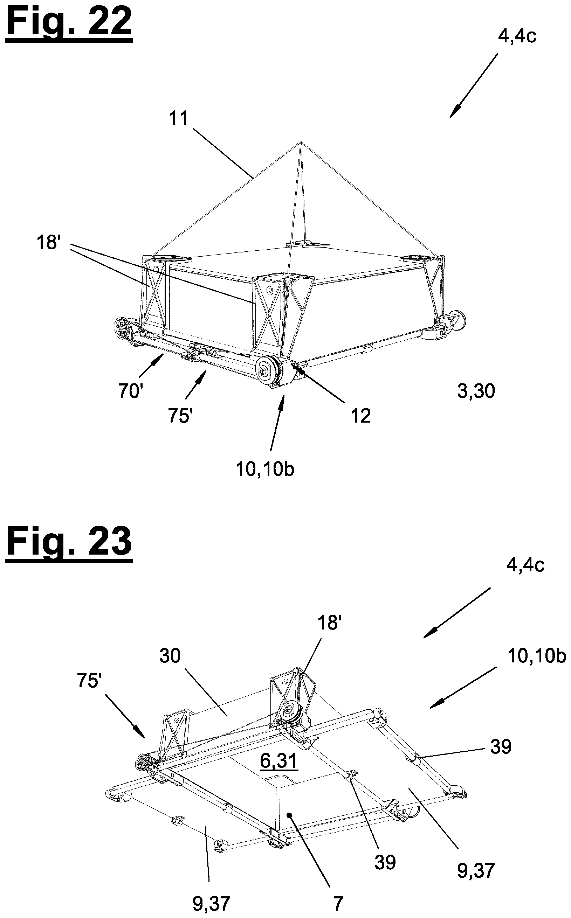

Ein Frachtkompartiment 31, 31' weist bevorzugt keine dauerhafte untere Begrenzung 38 auf. Der Frachtaufnahmekörper 3 ist bevorzugt frei von einer Vertikalabstützung nach unten. Alternativ kann der Frachtaufnahmekörper 3 mindestens einen beweglichen Bodenbegrenzungskörper 37 aufweisen, der allerdings bevorzugt entweder für oder bei der Aufnahme des Frachtaufnahmekörpers 3 an einem Absetzträger 4 entfernt wird (vgl. Figur 5 und 6), oder der alternativ bevorzugt mindestens eine Bodenfläche 9 des Absetzträgers 4 bildet und durch den Absetzträger 4 gesteuert bewegbar ist, insbesondere mittels mindestens einer Kupplungsvorrichtung 39 (vgl. Figur 23).

Die gesteuerte Bewegung der mindestens einen Bodenfläche 9 kann auf beliebige Weise ausgelöst oder angetrieben sein. Bevorzugt umfasst der Absetzträger 4 mindestens einen Bodenflächen-Bewegungsantrieb 13, der dazu ausgebildet ist, die Bewegung der mindestens einen Bodenfläche 9 erfolgen zu lassen. Der Bodenflächen-Bewegungsantrieb 13 kann eine beliebige Ausbildung haben. In den Figuren 17 bis 26 sind beispielhaft Bodenflächen-Bewegungsantriebe 13 gezeigt, die einen elektrisch steuerbaren Antrieb, insbesondere einen Elektromotor umfassen. Alternativ oder zusätzlich kann ein Bodenflächen-Bewegungsantrieb 13 einen aus physikalisch geladenen Energiespeicher gespeisten Antrieb haben, bspw. einen Federspeicher-Antrieb oder einen Gasdruckspeicher-Antrieb. Die Steuerung des mindestens einen Bodenflächen-Bewegungsantriebs 13 kann durch ein beliebiges Steuermittel erfolgen. Das Steuermittel kann beispielsweise eine (eigene) Steuereinrichtung des Absetzträgers 4 sein oder eine externe Steuereinrichtung, insbesondere eine Drohnen-Steuerung oder eine Steuereinrichtung der Dockingeinrichtung 5.

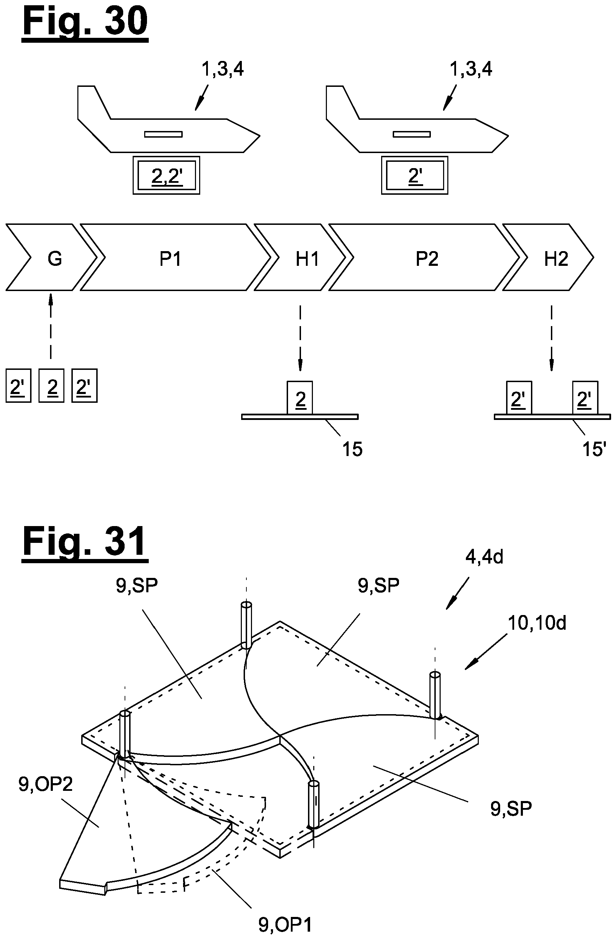

Die Bewegung der mindestens einen Bodenfläche 9 kann derart erfolgen (und/oder gesteuert sein), dass eine Gesamtfracht 2+2' oder eine Teilfracht 2 / 2' aus der Aufnahmepassage 6 und/oder aus dem Frachtaufnahmekörper 3 und/oder aus bestimmten Frachtkompartimenten 31, 31' freigegeben wird. Figur 30 erläutert beispielhaft das Freigeben einer ersten Teilfracht 2 / das Freigeben von mindestens einem ersten Frachtstück 2 an einem ersten Ziel-Ort und das nachfolgende Freigeben einer anderen Teilfracht 2' / das Freigeben noch mindestens einem zweiten Frachtstück 2' an einem zweiten Ziel-Ort.

In der Schließposition SP bedeckt eine Bodenfläche 9 den vertikalen Zugang 7 zu der Aufnahmepassage 6 des Absetzträgers. In der Öffnungsposition OP1, OP2 gibt die Bodenflächen 9 den vertikalen Zugang 7 zumindest teilweise frei. Es ist insbesondere vorgesehen, dass eine Gruppe von Bodenflächen 9 in der Schließposition SP den vertikalen Zugang 7 zu der Aufnahmepassage 6 vollständig bedeckt, d.h. wenn sich die Bodenflächen 9 jeweils in der Schließposition SP befinden. Dies ist beispielhaft in Figur 27 gezeigt. Eine Gruppe von Bodenflächen 9 gibt den vertikalen Zugang 7 zu der Aufnahmepassage zumindest teilweise frei, wenn sich mindestens eine Bodenfläche 9 oder eine Mehrzahl von Bodenflächen 9 in einer Öffnungsposition OP1, OP2 befindet. Dies ist beispielhaft in Figuren 28 und 29 gezeigt.

Die mindestens eine gesteuert bewegbare Bodenfläche 9 ist bevorzugt über Führungsgetriebe 10 geführt. Ein Führungsgetriebe kann eine Bodenfläche separat führen oder eine Gruppe von Bodenflächen führen. Die Figuren 17 bis 29 zeigen mögliche Ausführungen eines Führungsgetriebes, die jeweils unterschiedliche Anordnungen, Führungsarten 10a, 10b, 10c, 10d und/oder unterschiedliche konstruktive Ausbildungen illustrieren. Diese Ausbildungen sind rein beispielhaft gewählt und können in beliebiger Weise abgewandelt werden.

Ein Führungsgetriebe 10 kann nach der Art einer Linearführung 10a, 10b und/oder nach der Art einer Bogenführung 10c und/oder nach der Art einer Drehführung 10d ausgebildet sein und insbesondere eine entsprechende Linearbewegung, Bogenbewegung und/oder Drehbewegung für mindestens eine Bodenfläche 9 vorgeben oder führen.

Ein Führungsgetriebe 10 kann bevorzugt ein Führungsgestänge 75, 75' und/oder einen Seiltrieb 70, 70' umfassen. Das Führungsgetriebe und/oder der Seiltrieb können beliebig ausgebildet sein.

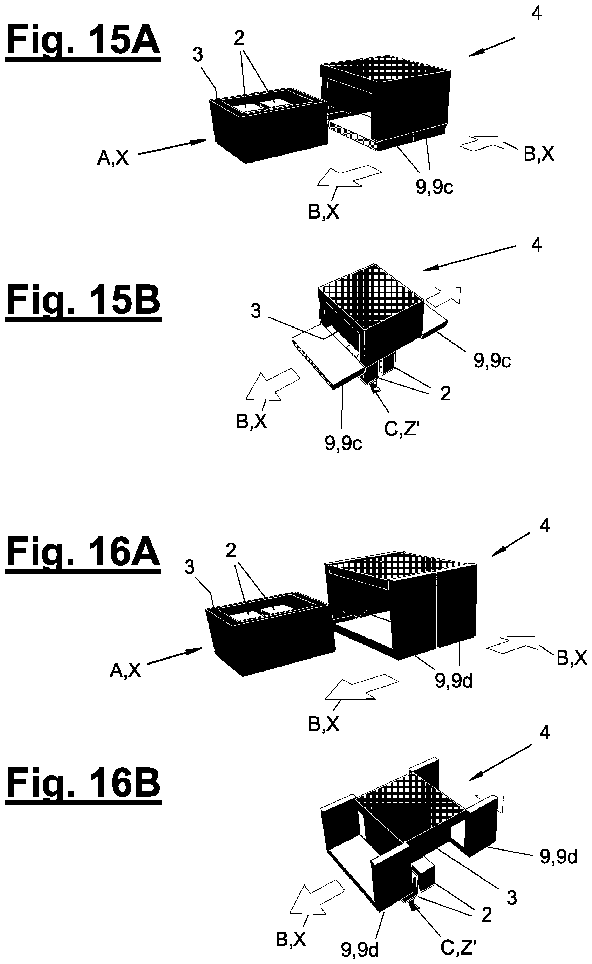

In den Beispielen der Figuren 17 bis 21 ist ein Führungsgetriebe 70 in einem in Vertikalrichtung Z oberen Höhenabschnitt der Aufnahmepassage 6 oder über der Aufnahmepassage 6 angeordnet. Dies korrespondiert mit einer Bewegungskinematik gemäß den Figuren 14A / 14B und 16A / 16B. In diesen Fällen ist beispielhaft eine Bodenfläche 9 an einem L-förmigen Verschlusskörper 9b, 9d ausgebildet, der an einem in Vertikalrichtung Z nach oben weisenden Teilabschnitt mit dem Führungsgestänge 75, 75' verbunden ist. Ein L-förmiger Verschlusskörper 9b, 9d kann zusätzlich zu einer Bodenfläche 9 eine Stützstruktur 77, 77' umfassen, die sich bevorzugt von einem in der Öffnungsrichtung A außen liegenden Randabschnitt der Bodenfläche 9 (Figuren 14A, 14B sowie 20, 21) und/oder von einem schräg oder quer zur Öffnungsrichtung A liegenden Randabschnitt der Bodenfläche 9 (Figuren 16A, 16B) zu dem Verbindungspunkt mit dem Führungsgetriebe 10 erstreckt, insbesondere zu dem Verbindungspunkt mit einem Führungsgestänge 75, 75'.

In den Beispielen der Figuren 22 bis 26 ist ein Führungsgetriebe 70' in einem in Vertikalrichtung Z unteren Höhenabschnitt der Aufnahmepassage 6 oder unterhalb der Aufnahmepassage 6 angeordnet. Dies korrespondiert mit einer Bewegungskinematik gemäß den Figuren 13A / 13B und 15A / 15B. In den dort gezeigten Fällen ist beispielhaft eine Bodenfläche 9 an einem flachen Verschlusskörper 9a, 9b ausgebildet, der an einem horizontalen Außenabschnitt oder an einer in Vertikalrichtung nach unten Z' weisenden Seite mit dem Führungsgestänge 75' verbunden ist.

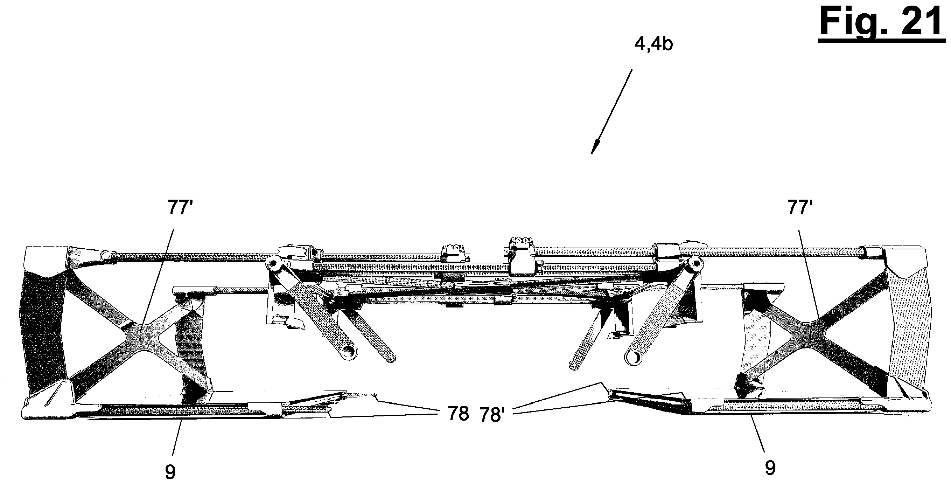

Eine Bodenfläche 9 kann ausschließlich durch ein Führungsgetriebe 10 abgestützt sein. Alternativ kann mindestens eine Bodenfläche 9 zumindest in der Schließposition zusätzlich abgestützt sein. In dem Beispiel von Figur 21 sind je zwei zueinander entgegengesetzt bewegbare Bodenflächen 9 in der Schließposition (SP) untereinander durch Gegenstützmittel 78, 78' zusätzlich abgestützt. Die Gegenstützmittel 78, 78' können eine beliebige Ausbildung haben. In dem gezeigten Beispiel umfassen die Gegenstützmittel je einen Stiftkörper 78 und eine korrespondierende Stiftaufnahme 78'. Der Stiftkörper 78 kann koaxial zu der Stiftaufnahme 78' angeordnet und in Annäherung an die Schließposition (SP) in die Stiftaufnahme 78' einführbar sein.

Der Ablauf der Figurenteile 13A zu 13B (Fig. 14, 15, 16 entsprechend) zeigt einen möglichen Übergang der mindestens einen Bodenfläche 9 aus einer Schließposition SP in eine Öffnungsposition OP. Die Öffnungsrichtung B der mindestens einen Bodenfläche 9 ist dabei in einer Horizontalrichtung X, Y ausgerichtet. Die Öffnungsrichtungen B von zwei unterschiedlichen Bodenflächen 9 können gleichen Horizontalrichtungen X, Y oder in unterschiedlichen Horizontalrichtungen X, Y und/oder in unterschiedlichen Orientierungen entlang derselben Horizontalrichtung X, Y gerichtet sein.

In den Figuren 13A, 13B sowie 14A, 14B ist eine Aufnahmerichtung A eines Frachtaufnahmekörpers 3 in einer anderen Horizontalrichtung ausgerichtet als eine Öffnungsrichtung B der mindestens einen Bodenfläche. Insbesondere kann die Aufnahmerichtung A schräg oder senkrecht zu einer Öffnungsrichtung B sein.

In den Figuren 15A, 15B sowie 16A, 16B ist eine Aufnahmerichtung A eines Frachtaufnahmekörpers 3 parallel zu einer Öffnungsrichtung B der mindestens einen Bodenfläche 9 ausgerichtet.

Das Führungsgetriebe 10 kann ein Bestandteil des Absetzträgers 4 sein oder alternativ ein Bestandteil des Frachtaufnahmekörpers 3. Es sind auch Zwischenvarianten möglich, bei denen Einführungsgetriebe gemeinsamer Bestandteil des Absetzträgers 4 und des Frachtaufnahmekörpers 3 ist oder durch zusammenwirkende konstruktive Elemente des Absetzträgers 4 und des Frachtaufnahmekörpers 3 gebildet wird. Nachfolgend wird allgemein davon ausgegangen, dass das Führungsgetriebe 10 ein Bestandteil des Absetzträgers 4 ist.

Ein Führungsgetriebe 10 kann in beliebiger Weise ausgebildet sein. Die Figuren enthalten eine Mehrzahl an Ausführungsformen für ein Führungsgetriebe 10, deren konstruktive Merkmale und/oder deren Betätigungsart / Führungsart (Linearführung 10a, 10b; Bogenführung 10c; Drehführung 10d) miteinander kombinierbar oder gegeneinander ersetzbar ist.

Eine gesteuert bewegliche Bodenfläche 9 kann bevorzugt an der Stützstruktur 8 des Absetzträgers 4 abgestützt sein. Dabei kann insbesondere das Führungsgetriebe 10 kraftleitend zwischen der Bodenfläche 9 und der Stützstruktur 8 angeordnet sein. Beispiele hierfür finden sich unter anderem in den Figuren 5, 6 sowie 17 bis 29 und 31.

Alternativ kann eine gesteuert bewegliche Bodenfläche 9 an dem Frachtaufnahmekörper 3 abgestützt sein, wobei insbesondere das Führungsgetriebe 10 kraftleitend zwischen der Bodenfläche 9 und dem Frachtaufnahmekörper 3 angeordnet ist. Der Fachaufnahmekörper 3 ist selbst wiederum bevorzugt an der Stützstruktur 3 des Absetzträger 4 fixiert und kraftleitend abgestützt.

Eine mögliche Ausführungsvariante (nicht dargestellt) sieht vor, dass ein Absetzträger 4 mindestens einen Bodenbegrenzungskörper 37 umfasst, der über eine Schiebeführung an einer Rahmenstruktur 30 des Frachtaufnahmekörpers 3 gelagert ist. Ein solcher Bodenbegrenzungskörper 37 kann im vorgesehenen Beladungszustand zumindest anteilig eine Bodenfläche 9 des Absetzträgers 4 bilden.

Der Absetzträger 4 umfasst bevorzugt mindestens einen Bodenflächen-Bewegungsantrieb 13. Dies ist bevorzugt schaltbar, steuerbar oder regelbar.

Der Bodenflächen-Bewegungsantrieb 13 kann einfach oder mehrfach vorhanden sein. Bevorzugt ist mindestens ein separater Bodenflächen-Bewegungsantrieb 13 für je eine bewegbare Bodenfläche 9 oder für eine Gruppe von Bodenflächen 9 vorgesehen.

Ein Bodenflächen-Bewegungsantrieb 13 kann direkt kraftleitend mit einer bewegbaren Bodenfläche 9 des Absetzträgers 4 verbunden sein. Eine solche Ausbildung ist insbesondere dann sinnvoll, wenn die Bodenfläche 9 ein eigener Bestandteil des Absetzträgers 4 ist. Alternativ kann ein Bodenflächen-Bewegungsantrieb 13 durch mindestens eine Kupplungsvorrichtung 39 mit einer bewegbaren Bodenfläche 9 verbunden sein. Dies ist beispielsweise dann sinnvoll, wenn eine bewegbare Bodenfläche 9 durch einen Bodenbegrenzungskörper 37 des Frachtaufnahmekörpers 3 gebildet ist. In Figur 23 sind beispielhaft Kupplungsvorrichtungen 39 gezeigt, die temporär mit Bodenbegrenzungskörpern 37 verbindbar sind, wenn oder solange der Frachtaufnahmekörper 3 in der Aufnahmepassage 6 des Absetzträgers 4 aufgenommen ist. Die ein oder mehreren Kupplungsvorrichtungen 9 sind insbesondere bei der Beladung schließbar und/oder bei der Entnahme des Frachtaufnahmekörpers 3 öffenbar.

Der mindestens eine Bodenflächen-Bewegungsantrieb 13 ist bevorzugt dazu ausgebildet, eine oder mehrere Bodenflächen 9, insbesondere genau eine Bodenfläche 9 oder eine Gruppe von Bodenflächen 9, in einer Öffnungsposition OP1, OP2 zu bewegen, um ein Frachtstück durch den vertikalen Zugang 7 in Richtung des Untergrunds 15 freizugeben. Im Rahmen der vorliegenden Offenbarung ist insbesondere vorgesehen, dass mindestens ein Frachtstück 2,2' infolge der Bewegung mindestens einer Bodenfläche 9 der Öffnungsposition OP1, OP2 jegliche Schwerkraftabstützung verliert und durch den vertikalen Zugang 7 in Richtung des Untergrunds 15 aus der Aufnahmepassage 6 fällt.

Mit anderen Worten bilden die ein, zwei oder mehr beweglichen Bodenflächen 9 bevorzugt die ausschließliche und gesteuert entfernbare Schwerkraftabstützung für die ein oder mehreren Frachtstücke 2,2'.

Der Absetzträger 4 ist bevorzugt dazu ausgebildet, in Vertikalrichtung nach unten abgelassen und zumindest temporär auf dem Untergrund 15 aufgestellt zu werden. Er ist insbesondere dazu ausgebildet, separat, d.h. getrennt von einer Flugdrohne 1, auf den Untergrund 15 aufgestellt zu werden.

Gemäß einer bevorzugten Ausführung (nicht dargestellt) kann der Absetzträger 4 eine Untergrund-Erfassungseinrichtung aufweisen. Bevorzugt ist die Bewegung einer gesteuert bewegbaren Bodenfläche 9 nur auslösbar oder zugelassen, wenn festgestellt wird, dass der Absetzträger 4 auf dem Untergrund 15 aufgestellt ist, oder dass der erfasste Untergrundabstand einen Abstand-Grenzwert unterschreitet. Der Begriff "Absetzträger" bedeutet daher nicht, dass der Absetzträger vollständig auf einem Untergrund abgesetzt werden muss. Es kann ausreichend sein, dass der Absetzträger mit einem bestimmten Untergrundabstand in Vertikalrichtung Z oberhalb des Untergrunds 15 verbleibt, um ein oder mehrere Frachtstücke 2 abzugeben.

Eine bevorzugte Ausführung sieht vor, dass eine Beladung des Absetzträgers 4 mit der Fracht in einer Horizontalrichtung X erfolgt. Mit anderen Worten ist eine Aufnahmerichtung A, in der mindestens ein Frachtstück in die Aufnahmepassage 6 einführbar ist, in einer Horizontalrichtung X orientiert. Anders ausgedrückt ist die Aufnahmerichtung A bevorzugt in einer Horizontalebene orientiert.

Der Absetzträger 4 weist bevorzugt mindestens einen horizontalen Zugang 16,16' zu der Aufnahmepassage 6 auf, wobei weiter bevorzugt ein Frachtaufnahmekörper 3 durch den horizontalen Zugang 16,16' in die Aufnahmepassage 6 einführbar ist. Wenn zwei oder mehr horizontale Zugänge 16,16' vorgesehen sind, können diese an beliebigen Seiten des Absetzträgers 4 vorgesehen sein.

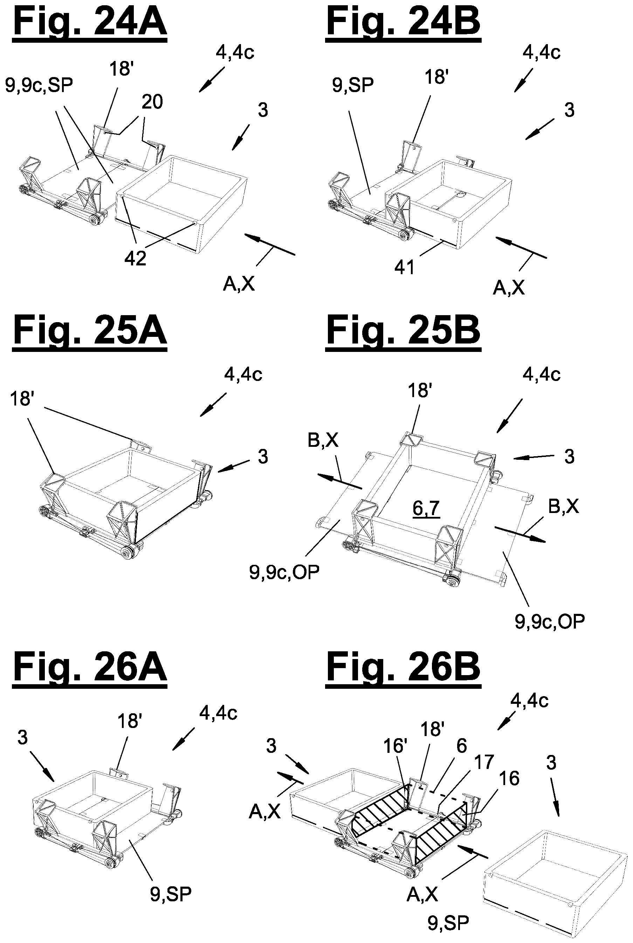

Figur 6 illustriert ein Beispiel, bei der die Aufnahmepassage 6 über einen ersten horizontalen Zugang 16 und über einen weiteren gegenüberliegenden horizontalen Zugang 16' zugänglich ist. Eine gegenüberliegende Anordnung von zwei horizontalen Zugängen 16,16' kann gemäß der Darstellung in Figur 26B ermöglichen, dass zur Neubeladung eines Absetzträgers 4 ein erster und insbesondere von Frachtstücken 2 entleerter Frachtaufnahmekörper 3 auf der Aufnahmepassage 6 entnehmbar ist, ohne die Einführung eines weiteren und insbesondere mit neuen Frachtstücken 2,2' bepackten Frachtaufnahmekörpers 3' in die Aufnahmepassage 6 zu behindern.

Das Vorsehen von mindestens zwei horizontalen Zugangsöffnungen 16,16' zu derselben Aufnahmepassage 6 kann somit einen besonders zügigen Beladungswechsel ermöglichen oder unterstützen.

Ein Frachtaufnahmekörper 3 kann auf beliebige Weise in eine Frachtaufnahmepassage 6 eingebracht werden. Der Absetzträger 4 kann insbesondere eine manuelle, eine teil-automatische oder eine vollautomatische Beladung unterstützen.

Gemäß einer bevorzugten Ausführung umfasst der Absetzträger 4 und insbesondere die Aufnahmepassage 6 eine Führungsstruktur 17. Die Führungsstruktur 17 kann beliebig ausgebildet sein. Sie kann insbesondere eine Horizontalführungsstruktur sein. Weiter bevorzugt ist die Führungsstruktur 17 dazu ausgebildet, den Frachtaufnahmekörper 3 relativ zu dem Absetzträger 4, insbesondere relativ zur Stützstruktur 8 des Absetzträgers 4, in mindestens oder genau einer Horizontalrichtung X, Y beweglich zu führen. Sie kann optional zusätzlich dazu ausgebildet sein, den Frachtaufnahmekörper 3 in Vertikalrichtung Z zumindest nach unten festzulegen und insbesondere abzustützen. Weiter optional kann eine vollständige Festlegung in Vertikalrichtung Z (nach oben und unten) vorgesehen sein.

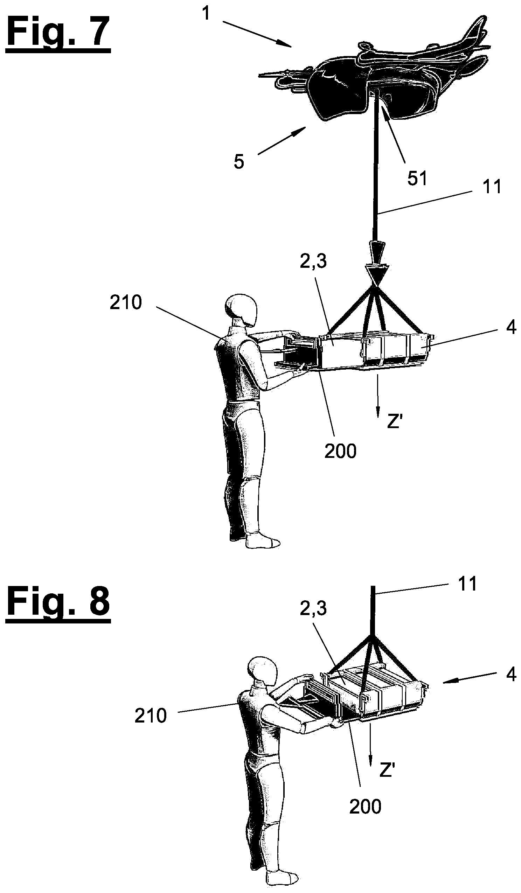

Der Absetzträger 4 und/oder eine Aufnahmepassage 6 kann dazu ausgebildet sein, dass ein Frachtaufnahmekörper 3 in einer Horizontalrichtung X, Y einführbar und/oder entnehmbar und optional weiterhin in einer anderen Richtung einführbar und/oder entnehmbar ist. Gemäß einer bevorzugten Ausbildung ist vorgesehen, dass ein Frachtaufnahmekörper 3 ausschließlich in genau einer Horizontalrichtung X, Y, weiter insbesondere in genau einer Orientierung entlang genau einer Horizontalrichtung X, Y in eine Aufnahmepassage 6 einführbar und/oder entnehmbar ist. Figuren 7 und 8 zeigen beispielhaft eine manuelle Beladung eines Absetzträgers 4 in einer Horizontalrichtung durch eine Zugangsöffnung 16. In dem gezeigten Beispiel ist ein Frachtaufnahmekörper 3 zumindest für den Vorgang der Beladung auf einem externen flachen Stützmittel 200, beispielsweise einem Tablett, angeordnet. Durch das externe Stützmittel 200 kann bewirkt sein, dass die ein oder mehreren Frachtstücke 2 vor oder während der Beladung nicht in der Vertikalrichtung Z aus einem Frachtaufnahmekörper 3 herausfallen, der die Fracht ausschließlich in Horizontalrichtung positioniert und fixiert und insbesondere keine eigene Vertikalabstützung nach unten aufweist. Das externe Stützmittel 200 kann bei der Einführung des Frachtaufnahmekörpers 3 in direkter horizontaler Nebenlage zu den in Schließstellung SP befindlichen ein oder mehreren Bodenflächen 9 des Absetzträgers 4 verbleiben. Alternativ kann ein externes Stützmittel 200 bei der Beladung mit in die Aufnahmepassage 6 eingeschoben und zum Ende des Beladungsvorgangs wieder aus dem Absetzträger 4 entfernt werden, sodass ausschließlich der vertikalabstützungsfreie Frachtaufnahmekörper 3 in der Aufnahmepassage 6 verbleibt.

Die Fixierung eines Frachtaufnahmekörpers 3 in dem Absetzträger 4 und insbesondere in einer Aufnahmepassage 6 kann auf beliebige Weise erfolgen.

Eine bevorzugte Ausführung sieht vor, dass der Absetzträger 4 mindestens ein steuerbares Sicherungsmittel 18 aufweist, das einen horizontalen Zugang 16,16' zu der Aufnahmepassage 6 zeitweise sperrt oder freigibt. Alternativ oder zusätzlich kann vorgesehen sein, dass das steuerbare Sicherungsmittel 18 einen Frachtaufnahmekörper 3 in einer quer zu dem horizontalen Zugang 16,16' orientierten Richtung, insbesondere in der Aufnahmerichtung A zeitweise fixiert oder freigibt. Ein Sicherungsmittel 18 kann beispielsweise gemäß der Darstellung in Figuren 7 bis 12 einen bewegbaren Riegelkörper umfassen, der zwischen einer aktiven Stellung und einer inaktiven Stellung bewegbar ist. In der aktiven Stellung kann das Sperren des horizontalen Zugangs 16,16' und/oder das Fixieren eines Frachtaufnahmekörpers 3 bewirkt sein. In einer inaktiven Stellung kann das Freigeben eines horizontalen Zugangs 16,16' und/oder das Freigeben eines Frachtaufnahmekörpers 3 in einer Aufnahmerichtung A bewirkt sein. Für das Fixieren eines Frachtaufnahmekörpers 3 kann alternativ oder zusätzlich ein separat oder zusammen mit einem Sicherungsmittel bewegbarer Haltekörper 20 vorgesehen sein, der insbesondere in einer aktiven Stellung eine formschlüssige Verbindung mit einem Frachtaufnahmekörper 3 und insbesondere einer Rahmenstruktur 30 herstellt.

Figuren 24 bis 26 zeigen eine alternative Ausführungsart, bei der ein Sicherungsmittel 18' dazu ausgebildet ist, einerseits einen horizontalen Zugang 16,16' zu der Aufnahmepassage 6 zeitweise zu sperren oder freizugeben und weiterhin in der aktiven Position einen Frachtaufnahmekörper 3 quer zur Aufnahmerichtung A zu fixieren. Weiterhin ist an dem Absetzträger 4 und hier beispielhaft als Zusatzbestandteil an dem Sicherungsmittel 18' ein Haltekörper 20 vorgesehen, der mit einer Fixierstelle 42 am Frachtaufnahmekörper 3 zusammenwirken kann, um in der aktiven Stellung des Haltekörpers 20 den Frachtaufnahmekörper 3 entlang der Aufnahmerichtung A zu fixieren.

In dem Beispiel von Figur 24 bis 26 ist der Haltekörper 20 zusammen mit dem Sicherungsmittel 18' bewegbar. Das Sicherungsmittel 18' ist als ein beweglicher Sperrkörper mit mehreren Anschlagflächen, hier mit insbesondere drei orthogonal zueinander stehenden Anschlagflächen in einer Eckumhüllung ausgebildet. Diese Ausführungsform ist rein beispielhaft.

Ein Sicherungsmittel, 18' kann für sich allein bewegbar sein. Ebenso kann ein Haltekörper 20 für sich allein bewegbar sein. Alternativ ist eine gemeinsame oder kombinierte, insbesondere einseitig mitnehmende Bewegbarkeit für einen Sicherungskörper 18,18' und einen Haltekörper 20 vorgesehen. Ein Sicherungsmittel 18,18' und/oder ein Haltekörper 20 kann einen eigenen Antrieb aufweisen und insbesondere aktiv bewegbar, weiter gesteuert bewegbar sein. Alternativ kann ein Sicherungsmittel 18,18' und/oder ein Haltekörper 20 passiv ausgebildet sein, sodass er insbesondere durch externe Einwirkung zwischen einer inaktiven und einer aktiven Position bewegbar ist.

Figuren 5 bis 29 und 31 zeigen verschiedene Ausführungsvarianten eines Frachtaufnahmekörpers 3 zur Beförderung einer Fracht. Diese Ausführungsformen sind nicht abschließend. Ihre Ausbildungsmerkmale sind in beliebiger Weise miteinander kombinierbar oder gegeneinander ersetzbar.

Ein Frachtaufnahmekörper gemäß der vorliegenden Offenbarung ist zur Beförderung einer Fracht vorgesehen und ausgebildet, die aus einem oder mehreren Frachtstücken 2 besteht. Die Beförderung der Fracht und des Frachtaufnahmekörpers erfolgt in der vorgesehenen Benutzungsart mittels einer Flugdrohne 1. Der Frachtaufnahmekörper 3 weist eine Rahmenstruktur 30 auf, die dazu ausgebildet ist den Frachtaufnahmekörper 3 an einer externen Führungsstruktur 17 festzulegen. Der Frachtaufnahmekörper 3 umfasst mindestens ein Frachtkompartiment 31, bevorzugt zwei oder mehr Frachtkompartimente 31,31'. In dem mindestens einen Frachtkompartiment 31 und insbesondere in jedem Frachtkompartiment 31 ist mindestens ein Frachtstück 2 aufnehmbar.

Das mindestens eine Frachtkompartiment 31 ist bevorzugt in seiner horizontalen Erstreckung und/oder in seiner horizontalen Lage relativ zu der Rahmenstruktur 30 derart einstellbar und fixierbar, dass mindestens eine Schwerpunktlagen-Optimierung der Fracht, insbesondere von zwei oder mehr Frachtstücken 2, für einen Flugdrohnentransport durchführbar ist. Mit anderen Worten ist das mindestens eine Frachtkompartiment 31 derart einstellbar und fixierbar, dass eine Abweichung der Ist-Schwerpunktlage der Fracht gegenüber einer Referenz-Schwerpunktlage justierbar ist. Durch die Schwerpunktlagen-Optimierung der Fracht in dem offenbarungsgemäßen Frachtaufnahmekörper ist somit mittelbar eine Schwerpunktlagen-Optimierung der Gesamtheit aus Flugdrohne 1 und geladener Fracht erzielbar.

Die Rahmenstruktur kann eine beliebige Ausbildung haben. Sie kann insgesamt durch einen starren Körper gebildet sein. Gemäß einer bevorzugten Ausführung, die in Figuren 17, 18 gezeigt ist, kann die Rahmenstruktur eine Mehrzahl von beweglich miteinander verbundenen Rahmenteilen 30a, 30b umfassen. Die Rahmenteile 30a, 30b sind bevorzugt durch Gelenke 30c, 30d miteinander verbunden, insbesondere durch Scharniere. Ein Rahmenteil 30a, 30b, insbesondere jeder Rahmenteil 30a, 30b, kann bevorzugt für sich durch einen starren Körper gebildet sein. Mit anderen Worten kann die Rahmenstruktur ein an Gelenken 30c, 30d faltbares Gebilde aus starren Rahmenteilen 30a, 30b sein. Die Rahmenstruktur kann durch ein Versteifungsmittel in einer aktiven Stellung fixierbar sein. Das Versteifungsmittel kann ein separater Körper oder Mechanismus sein. Alternativ oder zusätzlich kann das Versteifungsmittel durch mindestens einen Seitenwandungskörper 32 und/oder einen Deckkörper 43 gebildet sein. Mit anderen Worten können ein Seitenwandungskörper 32 und/oder ein Deckkörper 43 die Rahmenstruktur in einer aktiven Stellung versteifen und/oder fixieren.

Die Rahmenstruktur kann bevorzugt zwischen einer passiven Stellung und mindestens einer aktiven Stellung konfigurierbar sein, wobei insbesondere eine Relativlage von mindestsens zwei Rahmenteilen 30a, 30b veränderbar ist. Eine passive Stellung (nicht dargestellt) kann bevorzugt vorsehen, dass mehrere Rahmenteile 30a, 30b parallel und flächig aneinander angrenzend ausgerichtet und/oder aufeinander gelegt sind, insbesondere zwei zueinander benachbarte Rahmenteile 30a, 30b, die durch ein Gelenk oder Scharnier 30c, 30d verbunden sind. Eine passive Stellung kann mit anderen Worten eine zusammengefaltete Stellung sein. Eine aktive Stellung kann vorsehen, dass mehrere Rahmenteile 30a, 30b schräg oder quer zueinander ausgerichtet sind. Eine aktive Stellung kann mit anderen Worten eine entfaltete Stellung sein.

In dem Beispiel von Figur 17 ist ein erstes Gelenk 30c auf einer Schnittlinie zwischen einer ebenen Erstreckung eines ersten Rahmenteils 30a und einer ebenen Erstreckung eines zweiten Rahmenteils 30b angeordnet. Diese beiden Rahmenteile 30a, 30b können zur Einnahme einer passiven Stellung auseinandergefaltet werden, wobei zwischen den Rahmenteilen 30a, 30b insbesondere ein Zwischenwinkel von 180 Winkelgrad / ein gestreckter Winkel gebildet wird.

Ein zweites Gelenk 30d ist gegenüber einer solchen Schnittlinie der zueinander benachbarten Rahmenteile um einen Abstand D versetzt angeordnet. Der Abstand D ist bevorzugt derart gewählt, dass er gleich oder größer einer Rahmenteil-Wanddicke ist. Auf diese Weise können die an das zweite Gelenk 30d angrenzenden Rahmenteile zur Einnahme einer passiven Stellung unter Bildung eines Zwischenwinkels von etwa Null Winkelgrad aufeinander gefaltet werden. Dieses Zusammenfalten ist möglich, ohne dass es zu einer gegenseitigen Hemmung oder Blockade zwischen den Gelenkteilen / den benachbarten Rahmenteilen kommt. Alternativ sind beliebige andere Ausbildungen der Gelenke / Scharniere 30c, 30d möglich.

Es wird im weiteren davon ausgegangen, dass die Rahmenstruktur in einer aktiven Stellung ist, bei der insbesondere jeweils zwei Rahmenteile (30a, 30b) in der Horizontalebene zueinander schräg oder quer ausgerichtet sein. In den gezeigten Beispielen hab die Rahmenstruktur in der aktiven Stellung die Form einer Quader-Mantelfläche, wobei insbesondere je ein Rahmenteil (30a, 30b) eine Seitenfläche der Quaderform bildet. Alternativ kann eine andere Form vorgesehen sein, insbesondere die Form eines (sich in der Vertikalrichtung Z erstreckenden) geraden Prismas, weiter insbesondere mit einer (in der Horizontalebene liegenden) polygonalen Grundfläche. Die Grundfläche ist bevorzugt nicht von dem Rahmenkörper gebildet, sondern verbleibt in der aktiven Stellung des Rahmenkörpers als freie Öffnung zwischen den Rahmenteilen 30a, 30b, welche die seitlichen Anteile der Mantelfläche des Prismas bilden.

Bevorzugt weist der Frachtaufnahmekörper 3 mindestens zwei Frachtkompartimente 31 auf, die in der Horizontalebene X, Y relativ zu der Rahmenstruktur 30 nebeneinander und/oder verteilt anordenbar und fixierbar sind. Das eine oder die mehreren Frachtkompartimente 31, 31' sind bevorzugt in der aktiven Stellung der Rahmenstruktur in einem Raum gebildet, der sich innerhalb der (entfalteten) Rahmenteile 30a,30b befindet. Mit anderen Worten sind die ein oder mehreren Frachtkompartimente 31, 31' bevorzugt von der Rahmenstruktur (in der aktiven Stellung) in der Horizontalebene umgeben, aber nicht zwangsweise begrenzt. Die Begrenzung eines Frachtkompartiments 31,31' kann bevorzugt anteilig oder vollständig durch mindestens einen Seitenwandungskörper 32 gebildet sein.

Bevorzugt sind mindestens zwei Frachtkompartimente 31,31' derart einstellbar und fixierbar, dass eine zwei- oder mehrfache Schwerpunktlagen-Optimierung ermöglicht ist, insbesondere eine erste Schwerpunktlagen-Optimierung für eine Gesamtfracht und eine weitere Schwerpunktlagen-Optimierung für eine Teilfracht. Dies wird nachfolgend anhand der Figuren 27-30 erläutert.

In dem Beispiel von Figur 27 ist ein erstes Frachtkompartiment 31 vorgesehen, indem eine erste Fracht, insbesondere mindestens ein erstes Frachtstück 2 anordenbar oder geladen ist. Weiterhin ist mindestens ein weiteres Frachtkompartiment 31' vorgesehen, in dem eine weitere Fracht und insbesondere mindestens ein weiteres Frachtstück 2' anordenbar ist.

Die ersten und zweiten Frachtstücke 2,2' können gemäß dem Beispiel von Figur 30 eine Gesamtfracht sein, die in einem Beladevorgang G für einen Flugdrohnentransportvorgang aufgenommen wird. Dementsprechend kann eine Flugdrohne 1 in einer ersten Zeitphase P1, insbesondere in einer ersten Flugphase mit der Gesamtfracht 2,2' beladen sein. Zum Ende der ersten Zeitphase P1 kann eine erste Teilfracht 2 an einem ersten Zielort, insbesondere am dortigen Untergrund 15 abgeladen werden. Dabei kann insbesondere eine andere Teilfracht 2', in dem Absetzträger verbleiben. Anschließend kann die Flugdrohne 2 in einer zweiten Zeitphase P2 nur mit der verbleibenden Teilfracht 2' bewegt sein, insbesondere bis zu einer zweiten Frachtabgabe H2 auf dem Untergrund 15' an einem zweiten Zielort. In entsprechender Weise können weitere Zeitphasen mit weiteren nachfolgenden Frachtabgaben vorgesehen sein.

Bei jeder Frachtabgabe H1,H2 kann sich die Schwerpunktlage verändern. Folglich könnte durch die Verkettung von mindestens zwei Frachtabgaben H1, H2 an unterschiedlichen Ziel-Orten ein Zustand eintreten, durch den während zumindest einer Zeitphase P1, P2 parasitäre Effekte auftreten, wie beispielsweise eine verminderte Manövrierbarkeit der Flugdrohne 1 und/oder eine Beeinträchtigung der Flugdynamik, insbesondere der erzielbaren Fluggeschwindigkeit, und/oder eine Steigerung des Energieverbrauchs und/oder eine Verminderung der Reichweite.

Durch den Frachtaufnahmekörper gemäß der vorliegenden Offenbarung können derartige parasitäre Effekte vermindert oder beseitigt werden. Er weist bevorzugt mindestens zwei Frachtkompartiment 31,31' auf, die derart einstellbar und fixierbar sind, dass eine zwei- oder mehrfache Schwerpunktlagen-Optimierung ermöglicht ist, die zumindest eine erste Schwerpunktlagen-Optimierung für die Gesamtfracht 2,2' und eine weitere Schwerpunktlagen-Optimierung für mindestens eine Teilfracht 2/2' ermöglicht.

Gemäß einer bevorzugten Ausführung weist der Frachtaufnahmekörper 3 mindestens einen beweglichen Seitenwandungskörper 32 auf, der im vorgesehenen Beladungszustand eine (ausschließlich) horizontale Begrenzung 33 des mindestens einen Frachtkompartiments 31,31' bildet. Der mindestens eine Seitenwandungskörper 32 ist bevorzugt relativ zu der Rahmenstruktur 30 einstellbar und insbesondere zeitweise festlegbar. Alternativ oder zusätzlich kann der mindestens eine Seitenwandungskörper 32 größenveränderlich sein.

Der Frachtaufnahmekörper gemäß der vorliegenden Offenbarung ist bevorzugt für die darin aufnehmbaren oder aufgenommenen Frachtstücke 2 vertikalabstützungsfrei. Insbesondere ist der mindestens eine Seitenwandungskörper 32 bevorzugt für die Fracht vertikalabstützungsfrei.

Mit anderen Worten bildet der mindestens eine bewegliche Seitenwandungskörper 32 im vorgesehenen Beladungszustand eine ausschließlich horizontale Begrenzung 33 des mindestens einen Frachtkompartiment 31,31'. Der mindestens eine Seitenwandungskörper 32 kann optional weiterhin eine in Vertikalrichtung Z obere Begrenzung 34 eines Frachtkompartiment 31,31' bilden, ohne jedoch eine in Vertikalrichtung nach unten Z' wirkende untere Begrenzung 38 des Frachtkompartiments 31,31' zu bilden. Somit ist erzielbar, dass ein Frachtstück 2 in Vertikalrichtung nach unten Z' aus dem mindestens einen Frachtkompartiments 31,31' freigebbar ist und diese Freigebbarkeit insbesondere nicht durch den Frachtaufnahmekörper 3 blockiert ist.

Die Rahmenstruktur 30 und insbesondere eine Führungsstruktur 41 an der Rahmenstruktur 30, ist bevorzugt dazu ausgebildet, den Frachtaufnahmekörper 3 während eines Beladungsvorgangs in mindestens einer Horizontalrichtung X, Y an einer externen Führungsstruktur 17 beweglich zu führen. Die externe Führungsstruktur 17 kann insbesondere eine Horizontal-Führungsstruktur sein. Sie kann weiter insbesondere bevorzugt an dem Absetzträger 4 und insbesondere an einer Aufnahmepassage 6 des Absetzträgers 4 vorgesehen sein.

Alternativ oder zusätzlich ist die Rahmenstruktur 30 und insbesondere die Führungsstruktur 41 bevorzugt dazu ausgebildet, den Frachtaufnahmekörper 3 in einer Vertikalrichtung Z, zumindest nach unten an einer externen Führungsstruktur 17 festzulegen.

Das Beladen mindestens eines Frachtstücks 2 in einem Frachtkompartiment 31,31' des Frachtaufnahmekörpers 3 kann auf beliebige Weise erfolgen. Besonders bevorzugt ist das mindestens eine Frachtstück 2 in einer Vertikalrichtung Z einbringbar, insbesondere von oben her. Die zu befördernde Fracht kann von beliebiger Art sein. Eine Flugdrohnenlieferung kann insbesondere in solchen Fällen erhebliche Vorteile bieten, in denen eine besondere Dringlichkeit für die Frachtabgabe besteht und/oder eine Zugänglichkeit des Ziel-Orts mit Land- oder Wasserfahrzeugen unmöglich oder erschwert ist. Dies ist beispielsweise bei der Zustellung von Medikamenten für den Notfall-Einsatz gegeben, aber etwaige auch bei der Auslieferung von sonstigen Waren in Ballungsgebieten. Ebenso vorteilhaft ist die Flugdrohnen-Lieferung für schnell verderbliche Waren, deren Transport in einem bestimmten Temperaturfenster erfolgen muss, beispielsweise für die Lieferung von dringend benötigten Blutkonserven und/oder Organen.

In mittelfristiger Zukunft ist jedoch auch die Zustellung von Essensbestellungen oder beliebiger anderer Bestellartikel möglich.

Der Frachtaufnahmekörper gemäß der vorliegenden Offenbarung zeichnet sich durch eine besonders gute Anpassbarkeit auf unterschiedliche Frachttypen aus.

Gemäß einer bevorzugten Ausführung hat der Frachtaufnahmekörper 3 ein isolierendes Gehäuse 34 und/oder mindestens einen Seitenwandungskörper 32, der isolierend ausgebildet ist. Es kann insbesondere eine thermische Isolierung und/oder eine elektromagnetische Isolierung vorgesehen sein.

Wie oben ausgeführt, hat der Frachtaufnahmekörper 3 bevorzugt in Vertikalrichtung nach unten Z' eine permanent freie Zugangsöffnung 36 zu dem mindestens einen Frachtkompartiment 31,31'.

Gemäß einer alternativen Ausbildungsart kann der Frachtaufnahmekörper 3 mindestens einen (von dem mindestens einen Seitenwandungskörper 32) separaten Bodenbegrenzungskörper 37 umfassen, der relativ zu der Rahmenstruktur 30 und/oder relativ zu dem Seitenwandungskörper 32 geführt beweglich ist. Der Bodenbegrenzungskörper 37 bildet bevorzugt eine ausschließlich temporäre in Vertikalrichtung Z untere Begrenzung 38 eines Frachtkompartiments 31,31'. Der Bodenbegrenzungskörper 37 ist weiter bevorzugt zumindest für eine Entladung eines Frachtstücks 2 aus einer vertikalen Flucht zu dem Frachtkompartiment 31,31' entfernbar.

Der Bodenbegrenzungskörper 37 ist bevorzugt in einer ausschließlich oder überwiegend horizontalen Bewegung geführt bewegbar.

Der Bodenbegrenzungskörper 37 ist ferner bevorzugt zwischen einer Schließposition SP und mindestens einer Öffnungsposition OP1, OP2 bewegbar.

Alle Merkmale die im Rahmen der vorliegenden Offenbarung für die bevorzugte Ausführung von gesteuert bewegbaren Bodenflächen 9 an einem Absetzträger 4 offenbart sind, können in entsprechender Weise für den beweglichen Bodenbegrenzungskörper 37 an einem Frachtaufnahmekörper 3 gelten und umgekehrt.

Der mindestens eine Bodenbegrenzungskörper 37 bildet bevorzugt in der Schließposition SP eine ausschließlich temporäre in Vertikalrichtung Z untere Begrenzung 38 mindestens eines Frachtkompartiments 31,31' und hebt in der Öffnungsposition OP1, OP2 die untere Begrenzung 38 teilweise oder vollständig auf. Es kann insbesondere eine Gruppe von Bodenbegrenzungskörpern 37 vorgesehen sein, die eine vollflächige untere Begrenzung 38 mindestens eines Frachtkompartiments 31,31' bilden, wenn sich die Bodenbegrenzungskörper 37 jeweils in der Schließposition SP befinden, und ein in Vertikalrichtung Z untere Begrenzung 38 zumindest teilweise aufheben, wenn sich mindestens ein Bodenbegrenzungskörper 37 in einer Öffnungsposition OP1, OP2 befindet.

Mindestens ein Bodenbegrenzungskörper 37 kann eine Kupplungsvorrichtung 39 umfassen, über die eine externe Aktuierung auf dem Bodenbegrenzungskörper 37 übertragbar ist, um diesen (gesteuert) zwischen einer Schließposition SP und mindestens einer Öffnungsposition OP1, OP2 gesteuert zu bewegen.

Gemäß einer in Figur 5 skizzierten Ausführungsform kann ein Frachtaufnahmekörper 3 einen beweglichen oder entfernbaren Deckkörper 43 umfassen, der eine temporäre und in Vertikalrichtung Z obere Begrenzung 34 von mindestens einem Frachtkompartiment 31 bildet.

Weiter unten wird auf zusätzliche Details möglicher Ausführungsarten eines Frachtaufnahmekörpers 3 eingegangen.

Eine Dockingeinrichtung gemäß der vorliegenden Offenbarung ist zur Aufnahme eines Lastenträgers an einer Flugdrohne 1 vorgesehen und ausgebildet. Die Dockingeinrichtung 5 umfasst ein Gehäuse 50 mit einer in Vertikalrichtung nach unten (Z') geöffneten Kavität 51. Sie umfasst weiterhin optional eine Befestigungsschnittstelle 52 zur Verbindung des Gehäuses 50 mit der Flugdrohne 1. Die Dockingeinrichtung 5 kann auch ein integrierter Bestandteil der Flugdrohne 1 sein. In einem solchen Fall kann etwaig auf die Befestigungsschnittstelle 52 verzichtet sein und das Gehäuse 50 der Docking-Einreichung 5 kann einen Teil der Außenkontur des Drohnenkörpers 100 bilden. Dies ist die bevorzugte Ausführungsart, die im Großteil der Figuren gezeigt ist.

Die Dockingeinrichtung 5 umfasst eine steuerbare Hebevorrichtung 53, die dazu ausgebildet ist, den Lastenträger mittels eines Zugmittels 11 in Vertikalrichtung Z nach oben in die Kavität 51 zu bewegen oder in Vertikalrichtung nach unten Z' aus der Kavität 51 in Richtung eines Untergrunds 15 abzulassen.

Die Dockingeinrichtung 5 gemäß der vorliegenden Offenbarung umfasst Führungsmittel 54, die dazu ausgebildet sind, den Lastenträger zumindest bei der Aufnahme in die Kavität 51 und zumindest hinsichtlich seiner Drehposition um die Hochachse derart zu führen, dass die Ist-Drehposition des Lastenträgers an eine vorgesehene Referenz-Präposition angenähert oder angeglichen wird. Die Dockingeinrichtung 5 umfasst weiterhin Führungsmittel, die dazu ausgebildet sind, den Lastenträger in der aufgenommenen Position innerhalb der Kavität 51 zumindest in Horizontalrichtung X, Y festzulegen.

Durch die Dockingeinrichtung und deren Führungsmittel 54 kann erreicht werden, dass beim Aufnehmen des Ladungsträgers in die Kavität 51 eine Ausrichtung und Fixierung des Lastenträgers derart erfolgt, dass der Schwerpunkt des Lastenträgers (inklusive Fracht) in einen vorgegebenen Bezug zu der Dockingeinrichtung 5 gebracht und fixiert wird. Wenn für den Lastenträger eine Referenz-Position für dessen Schwerpunkt vorgegeben ist, wird eine feste und berechenbare Lage des Gesamt-Schwerpunkts für die Gesamtheit von Drohne 1 und Fracht erzielt.

Der Lastenträger kann ein fest mit der Dockingeinrichtung über das Zugmittel 11 verbundener Teil und insbesondere ein Bestandteil der Dockingeinrichtung 5 sein. Der Lastenträger kann eine beliebige Ausbildung haben. Besonders bevorzugt ist der Lastenträger als ein Absetzträger 4 gemäß der vorliegenden Offenbarung ausgebildet.

Die Führungsmittel 54 der Dockingeinrichtung 5 sind bevorzugt dazu ausgebildet, den Lastenträger/Absetzträger 4 in der Kavität 51 (auch) in Vertikalrichtung Z relativ zur Dockingeinrichtung 5 oder relativ zur Flugdrohne 1 zu fixieren, insbesondere unter Entlastung des Zugmittels 11.

Die Hebevorrichtung 53 ist bevorzugt dazu ausgebildet, dass Zugmittel 11 einzuziehen. Weiterhin können die Hebevorrichtung 53 und/oder die Führungsmittel 54 dazu ausgebildet sein, den Lastenträger/Absetzträger 4 zusätzlich zu greifen, wenn er in der Kavität 51 angeordnet ist oder zum Ende der Aufnahmebewegung hin.

Die Erstreckung des Zugmittels 11 kann in einen Nahbereich-Abschnitt 56, der bei der direkten Annäherung des Lastenträgers/Absetzträgers 4 an die Kavität 51 zwischen der Dockingeinrichtung 5 und dem Lastenträger verbleibt, und einem weiter entfernten Fernbereich-Abschnitt 57 untergliedert sein.

Eine bevorzugte Ausführung sieht vor, dass das Zugmittel 11 zumindest im Nahbereich-Abschnitt 56 anders ausgebildet ist und/oder andere oder ergänzende Wirkungen hat, als im Fernbereich-Abschnitt 57.

Eine bevorzugte Ausführung sieht vor, dass das Zugmittel 11 entlang eines Nahbereich-Abschnitts 56 dazu ausgebildet ist, ein Drehmoment um die Vertikalrichtung Z zu übertragen und/oder eine Kraft F in zumindest einer horizontalen Richtung XY zu übertragen. Dies kann auf beliebige Weise erfolgen.

Gemäß einer beispielhaften Ausführung kann das Zugmittel 11 zumindest im Nahbereich-Abschnitt 56 als eine Kette ausgebildet sein und/oder eine Kette umfassen. Die Kette kann weiter insbesondere eine rückensteife Kette sein.

Die Führungsmittel 54 der Dockingeinrichtung 5 können beliebig ausgebildet sein und aus einem oder mehreren konstruktiven Elementen bestehen.

Die Führungsmittel 54 können zumindest anteilig durch das Zugmittel 11 gebildet sein, insbesondere durch einen Teil des Zugmittels 11, der im Nahbereich-Abschnitt 56 wirksam ist. Weiter unten werden weitere alternative oder kombinierbare Ausbildungen erläutert.

Das Gehäuse 50 der Dockingeinrichtung 5 oder ein entsprechender Anteil der Außenkontur der Flugdrohne 1 hat eine in der horizontalen Haupt-Flugrichtung X orientierte Frontseite FS und/oder eine entgegen der Haupt-Flugrichtung X orientierte Rückseite RS. Es ist bevorzugt vorgesehen, dass die Frontseite FS und/oder die Rückseite RS die Kavität 51 der Dockingeinrichtung in einer Horizontalrichtung X bedeckt.

Weiterhin bevorzugt kann eine Frontseite FS und/oder eine Rückseite RS eine zur Haupt-Flugrichtung X gekrümmte Stromlinienform aufweisen, die insbesondere eine Reduzierung des Strömungswiderstand begünstigt, weiter insbesondere für eine Luftströmung von der Frontseite FS über eine untere Grenzebene 55 der Kavität 51 und/oder von einer unteren Grenzebene 55 der Kavität 51 zu der Rückseite FS. Die untere Grenzebene 55 kann dabei insbesondere durch eine in Vertikalrichtung untere Kontur des in der Kavität 51 aufgenommenen Lastenträgers/Absetzträgers 4 gebildet sein.

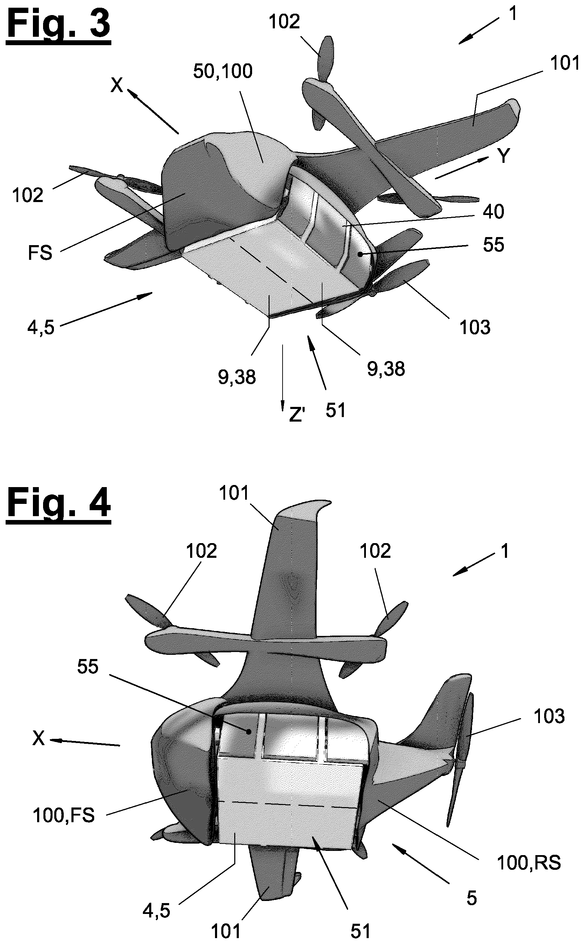

Das Gehäuse der Dockingeinrichtung 5 oder ein entsprechender Teil der Außenkontur des Drohnenkörpers 100 kann bevorzugt an zumindest einer der quer zur Haupt-Flugrichtung X orientierten horizontalen Längsseiten LS eine unterbrochene Wandung aufweisen, die eine Gehäuse-Öffnung 58 zu der Kavität 51 bildet. Die vorerwähnten Gehäuseausbildungen sind beispielhaft in Figuren 3, 4 und 9 bis 12 gezeigt.

Der Lastenträger und insbesondere der Absetzträger 4 kann bevorzugt eine Seitenwandung 19 aufweisen, die eine solche Gehäuse-Öffnung 55 zu der Kavität 51 überdeckt, wenn der Lastenträger in der Kavität 51 aufgenommen ist.

Die Seitenwandung 19 kann insbesondere derart ausgebildet sein, dass sie im Zusammenwirken mit dem Gehäuse 50 den Strömungswiderstand für eine seitliche Luftströmung reduziert, insbesondere für eine Luftströmung von der Frontseite FS über die Seitenwandung 19 und/oder von der Seitenwandung 19 zu der Rückseite RS.

Die Führungsmittel 54 können zumindest anteilig durch die Frontseite FS und/oder die Rückseite RS gebildet sein, insbesondere durch eine Grenzkontur der Frontseite FS und/oder der Rückseite SR zu der Gehäuseöffnung 55. Eine solche Grenzkontur kann insbesondere eine Anlaufschräge bilden, durch die eine Rotation des Ladungsträgers um die Hochachse in Richtung der Referenz-Drehposition bewirkt oder unterstützt wird.

Die vorliegende Offenbarung umfasst auch eine Frachttransportvorrichtung, zum Transport von Fracht mittels einer Flugdrohne, wobei die Frachttransportvorrichtung zumindest zwei Elemente aus der folgenden Gruppe aufweist, wobei die Gruppe einen Absetzträger gemäß der vorliegenden Offenbarung, einen Frachtaufnahmekörper gemäß der vorliegenden Offenbarung und eine Dockingeinrichtung gemäß der vorliegenden Offenbarung umfasst.

Ein weiterer Aspekt der vorliegenden Offenbarung ist eine Flugdrohne zum Transport von Fracht, wobei die Flugdrohne zumindest ein Element aus der folgenden Gruppe aufweist, wobei die Gruppe einen Absetzträger gemäß der vorliegenden Offenbarung, eine Frachtaufnahmekörper gemäß der vorliegenden Offenbarung und eine Dockingeinrichtung gemäß der vorliegenden Offenbarung umfasst.

Die Flugdrohne 1 kann beliebig ausgebildet sein. Gemäß einer bevorzugten Ausführung umfasst die Flugdrohne 1 einen Drohnenkörper 100, einen Tragflügel 101 und mindestens einen Vertikalschubantrieb 102. Sie ist ferner bevorzugt dazu ausgebildet, in ersten Zeitphasen (des Flugbetriebs) ausschließlich oder überwiegend im Tragflächenflugmodus betrieben zu werden und in zweiten Zeitphasen ausschließlich oder überwiegend im Schwebeflugmodus betrieben zu werden. Die Flugdrohne 1 kann einen separaten Horizontalschubantrieb 103 aufweisen, der insbesondere für einen Tragflächenflugmodus optimiert sein kann. Alternativ oder zusätzlich kann der zumindest eine Vertikalschubantrieb 102 zeitweise oder anteilig für einen Auftrieb im Schwebeflugmodus und zeitweise oder anteilig für einen Vortrieb im Tragflächenflugmodus genutzt sein.

Der Tragflächenflugmodus kann insbesondere für Flugphasen P1, P2 genutzt werden, bei denen sich die Flugdrohne 1 zwischen einem Start-Ort und mindestens einem Ziel-Ort bewegt (vgl. Figur 30). Der Schwebeflugmodus kann insbesondere genutzt werden, wenn ein Frachtwechsel stattfindet, also insbesondere während einer Phase der Beladung G und/oder während einer Phase der Frachtabgabe H1, H2.

Die Flugdrohne weist bevorzugt eine Dockingeinrichtung auf. Die Dockingeinrichtung kann eine beliebige Ausbildung haben. Sie kann bevorzugt gemäß der vorliegenden Offenbarung ausgebildet sein.

Die Dockingeinrichtung 5 kann als eine separate Baugruppe ausgebildet sein (vgl. Figur 1). Sie kann alternativ teilweise oder vollständig in den Drohnenkörper 100 oder die Außenkontur der Flugdrohne 1 integriert sein, weiter bevorzugt stromlinienförmig integriert sein.

Ein Transportvorbereitungsverfahren gemäß der vorliegenden Offenbarung ist dazu vorgesehen, mindestens ein Frachtstück 2 für einen Flugdrohnentransport vorzubereiten. Es umfasst zumindest die folgenden Schritte. Mindestens ein Frachtaufnahmekörper 3 wird bereitgestellt, wobei der Frachtaufnahmekörper 3 eine Rahmenstruktur 30 und mindestens ein einstellbares Frachtkompartiment 31,31' aufweist. Der Frachtaufnahmekörper 3 kann insbesondere gemäß den obigen Erläuterungen ausgebildet sein.

Mindestens ein Frachtstück 2 wird in ein Frachtkompartiment 31 des Frachtaufnahmekörpers 3 eingebracht, wobei die horizontale Lage und/oder die horizontale Erstreckung des Frachtkompartiments 31,31' relativ zu der Rahmenstruktur 30 derart eingestellt und fixiert wird, dass eine Abweichung einer Ist-Schwerpunktlage des mindestens einem Frachtstücks 2 gegenüber einer Referenz-Schwerpunktlage justiert wird. Die Einstellung des Frachtkompartiments kann auf beliebige Weise erfolgen. Besonders bevorzugt wird eine horizontale Begrenzung des Frachtkompartiments 31,31' durch mindestens einen Seitenwandungskörper 32 gebildet und die horizontale Lage und/oder horizontale Erstreckung des Frachtkompartiments 31,31' wird mittels einer Bewegung des mindestens einen Seitenwandungskörpers 32 eingestellt. Eine bevorzugte Ausführung sieht vor, dass eine zwei- oder mehrfache Schwerpunktlagen-Optimierung ausgeführt wird, insbesondere eine erste Schwerpunktlagen-Optimierung für die Gesamtfracht und eine weitere Schwerpunktlagen-Optimierung für eine Teilfracht.

Ein Transportvorbereitungsverfahren gemäß der vorliegenden Offenbarung kann vorsehen, dass das mindestens eine Frachtstück 2 innerhalb des Frachtkompartiments 31 in der Vertikalrichtung nach unten Z' durch ein externes Stützmittel 200 abgestützt wird, dass eine in der Vertikalrichtung nach unten Z' permanent freie Zugangsöffnung 36 zu dem mindestens einen Frachtkompartiment 31 abdeckt. Alternativ kann vorgesehen sein, dass das mindestens eine Frachtstück 2 in der Vertikalrichtung nach unten Z' durch einen Bodenbegrenzungskörper 37 abgestützt wird, der relativ zu der Rahmenstruktur 30 und/oder relativ zu dem Seitenwandungskörper 32 geführt beweglich ist und eine ausschließlich temporäre in Vertikalrichtung Z untere Begrenzung 38 für mindestens ein Frachtkompartiment 31,31' bildet.

Die vorliegende Offenbarung schlägt ein Beladeverfahren zur Einbringung mindestens eines Frachtstücks 2 in einen Ladungsträger vor. Wobei der Ladungsträger bevorzugt ein Absetzträger 4 gemäß den obigen Ausführungen ist. Der Absetzträger 4 kann insbesondere ein Bestandteil einer Flugdrohnen-Frachttransportvorrichtung an einer steuerbaren Flugdrohne 1 sein. Das Beladeverfahren umfasst zumindest die folgenden Schritte.

Mindestens ein Frachtstück 2 wird in einem Frachtkompartiment 31 eines Frachtaufnahmekörpers 3 bereitgestellt. Der Frachtaufnahmekörper 3 kann eine beliebige Ausbildung haben und insbesondere gemäß den obigen Erläuterungen ausgebildet sein. Der Frachtaufnahmekörper 3 kann weiter bevorzugt für das mindestens eine Frachtstück 2 vertikalabstützungsfrei sein und/oder dass mindestens eine Frachtstück 2 ausschließlich in der Horizontalebene XY positionieren und führen.

Der Frachtaufnahmekörper 3 wird in die Aufnahmepassage 6 des Absetzträgers 4 in einer Horizontalrichtung XY eingeführt, über das Frachtstück 2 durch die Bewegung des Frachtaufnahmekörpers 3 in der Horizontalrichtung XY mit bewegt wird und wobei der nach unten weisende Zugang 7 zu der Aufnahmepassage 6 durch mindestens eine gesteuert bewegbare Bodenfläche 9 begrenzt ist.

Gemäß einer bevorzugten Ausführung wird das mindestens eine Frachtstück 2 innerhalb der Aufnahmepassage 6 in der Vertikalrichtung nach unten Z' (ausschließlich) auf der mindestens einen gesteuert bewegbaren Bodenfläche 9 abgestützt.

Es kann vorgesehen sein, dass das mindestens eine Frachtstück 2 in dem vorerwähnten Transportvorbereitungsverfahren in der Vertikalrichtung nach unten Z' durch ein externes Stützmittel 200 abgestützt wird, dass eine in der Vertikalrichtung nach unten Z' permanent freie Zugangsöffnung 36 zudem mindestens ein Frachtkompartiment 31 abdeckt. In dem Beladeverfahren kann vorgesehen sein, dass ein externes Stützmittel 200, dass eine nur temporäre untere Abstützung für das mindestens eine Frachtstück 2 innerhalb des Frachtkompartiments 31 bildet, vor oder während des Einführens des Frachtaufnahmekörpers 3 in die Aufnahmepassage 6 entfernt wird.

Die vorliegende Offenbarung sieht ein Flugtransportverfahren zur Beförderung mindestens eines Warenstücks 2 mit einer Flugdrohne 1 vor. Es umfasst zumindest die folgenden Schritte:
Mindestens ein Frachtstück 2 wird in der Aufnahmepassage 6 eines Ladungsträgers bereitgestellt. Der Ladungsträger kann insbesondere in Absetzträger gemäß der vorliegenden Offenbarung sein. Das mindestens eine Frachtstück 2 ist innerhalb der offenen Passage 6 in der Horizontalrichtung XY positioniert und geführt. Das mindestens eine Frachtstück 2 ist weiter innerhalb der Aufnahmepassage 6 in der Vertikalrichtung nach unten Z' (ausschließlich) auf mindestens einer gesteuert bewegbaren Bodenfläche 9 des Ladungsträgers/Absetzträgers 4 abgestützt.

Der Absetzträger 4 wird in einer Kavität 51 an der Flugdrohne 1 aufgenommen.

Die Flugdrohne 1 wird gesteuert zu einem Ziel-Ort bewegt. Die Flugdrohne 1 wird in einem Schwebeflugmodus mit einem Abstand oberhalb eines Untergrunds 15 am Ziel-Ort gehalten.

Der Ladungsträger/Absetzträger 4 wird in der Vertikalrichtung Z zur Annäherung an den Untergrund 15 abgelassen. Die vorliegende Offenbarung sieht ein Frachtabgabeverfahren zur Ablage mindestens eines Frachtstücks 2 an einem Ziel-Ort vor. Das Frachtabgabeverfahren umfasst zumindest die folgenden Schritte:
Mittels einer Flugdrohne 1 wird ein Ladungsträger an einem Ziel-Ort bereitgestellt, wobei die Flugdrohne 1 im Schwebeflugmodus mit vertikalem Abstand über dem Untergrund 15 am Ziel-Ort gehalten wird und wobei der Ladungsträger in Vertikalrichtung nach unten Z' an den Untergrund 15 angenähert wird. Der Ladungsträger kann insbesondere als ein Absetzträger gemäß der obigen Erläuterungen ausgebildet sein.

Mindestens eine Bodenfläche 9, die einen nach unten weisenden vertikalen Zugang 7 zu einer Aufnahmepassage 6 des Ladungsträgers begrenzt, wird gesteuert in eine Öffnungsposition OP1, OP2 bewegt, sodass mindestens ein innerhalb der Aufnahmepassage 6 angeordnetes Frachtstück 2 jegliche Schwerkraftabstützung verliert und durch den vertikalen Zugang 7 in Richtung des Untergrunds 15 aus der Aufnahmepassage 6 fällt.

Gemäß einer bevorzugten Ausführung kann das mindestens eine Frachtstück 2 innerhalb der Aufnahmepassage 6 weiterhin in einem Frachtkompartiment 31 des Frachtaufnahmekörpers 3 aufgenommen und in Horizontalrichtung X, Y geführt sein.

Der Frachtaufnahmekörper 3 verbleibt bevorzugt bei der Abgabe des mindestens einen Frachtstücks 2 an dem Absetzträger 4, sodass ausschließlich das mindestens eine Frachtstück 2 abgegeben wird.

In dem Frachtabgabeverfahren können zwei oder mehr Frachtabgaben H1, H2 an unterschiedlichen Ziel-Orten vorgesehen sein, wobei insbesondere jeweils nur eine Teilfracht abgegeben wird.

Die vorliegende Offenbarung sieht ein Flugdrohnen-Frachtlieferverfahren vor, dass zumindest zwei Verfahrensteile aus der nachfolgenden Gruppe implementiert, wobei die Gruppe ein Transportvorbereitungsverfahren gemäß der vorliegenden Offenbarung, ein Beladeverfahren gemäß der vorliegenden Offenbarung, ein Flugtransportverfahren gemäß der vorliegenden Offenbarung und ein Frachtabgabeverfahren gemäß der vorliegenden Offenbarung umfasst.

Abwandlungen der Erfindung sind in verschiedener Weise möglich. Insbesondere können alle Aspekte gemäß der vorliegenden Offenbarung beliebig miteinander kombiniert werden. Ferner sind die Ausbildungsmerkmale der verschiedenen Aspekte in beliebiger Weise miteinander kombinierbar oder gegeneinander ersetzbar.

Figuren 27 bis 29 erläutern eine mögliche Bewegungsart für mindestens eine Bodenfläche, im gezeigten Beispiel für mindestens zwei einander gegenüberliegende Bodenflächen 9.

Bevorzugt ist die Öffnungsrichtung B einer gesteuert bewegbaren Bodenfläche 9 zumindest anteilig und bevorzugt überwiegend horizontal ausgerichtet. Die Öffnungsrichtung B kann insbesondere zumindest für denjenigen der Bodenfläche, der (noch) eine Abstützwirkung in der Vertikalrichtung nach unten Z' für ein Warenstück 2 bewirkt, überwiegend oder vollständig horizontal ausgerichtet. Hierdurch wird erreicht, dass ein aus dem Absetzträger 4 freizugebendes Frachtstück 2 nur eine minimale Fallhöhe in Richtung des Untergrunds 15 hat. Ein anderer Teil einer Bodenfläche, der (schon) keine Vertikalabstützung mehr gewährleistet, kann einen höheren vertikalen Bewegungsanteil haben. Das Führungsgetriebe 10 ist bevorzugt dazu ausgebildet, eine zumindest anteilig und bevorzugt überwiegend horizontal ausgerichtete Bewegung einer Bodenfläche 9 zu unterstützen oder vorzugeben. In der Darstellung von Figuren 27 bis 29 ist ein Führungsgetriebe 10 in der bevorzugten Ausführung mit einer Bogenführung 10d gezeigt.

Die Figuren 15 bis 26 zeigen verschiedene Ausführungsvarianten eines Führungsgetriebes 10 mit einer Linearführung 10a, 10c. In Figur 31 ist eine weitere Ausführungsvariante gezeigt, in welcher ein Führungsgetriebe 10 mit einer Drehführung 10d vorgesehen ist, deren Drehachse parallel zur Vertikalrichtung Z verläuft.

Ein Führungsgestänge 75 kann eine führende Stange 75a und mindestens eine geführte Stange 75b umfassen. Ein Führungsgestänge 75 kann eine Gleitführung umfassen. Gemäß einer bevorzugten Ausführung kann ein geführte Stange 75b ober eine mindestens zweiteilige Gleitführung 76 mit einer führenden Stange 75a verbunden sein. Die Gleitführung 76 kann weiter insbesondere einen ersten Schlitten 76a und einen zweiten Schlitten 76b umfassen. Je ein Schlitten 76a/76b kann der führenden Stange 75a fixiert und an der geführten Stange 75b gleitgeführt sein und umgekehrt.

Ein Seiltrieb 70, 70' kann eine beliebige Ausbildung haben. Er kann insbesondere ein angetriebenes Rad 71 und eine Umlenkrolle 72 umfassen, die bevorzugt an der Rahmenstruktur 30 des Absetzträgers 3 (axialfest) gelagert sind. Das angetriebene Rad 71 ist bevorzugt mit einem Drehantrieb 74, insbesondere einem Motor verbunden.

Eine bevorzugte Ausführung sieht vor, dass das angetriebene Rad 71 ein erstes Coil 71a für ein erstes Seilende und ein zweites Coil 71b für ein zweites Seilende aufnimmt, wobei ein Mittelbereich des Seiltriebs, der sich zwischen den Coils erstreckt, um die Umlenkrolle 72 geführt ist. Bei dieser Ausführung ist es weiter bevorzugt vorgesehen, dass eine Rotationslage des ersten Coils 71a gegenüber einer Rotationslage des zweiten Coils 71b einstellbar ist. Durch die Einstellung der Rotationslage kann eine Länge des Mittelbereichs des Seiltriebs vergrößert oder verkleinert werden, bspw. um eine durch Dehnung oder Alterung bedingte Längung zu kompensieren. Die Einstellung der Rotationslage kann in Stufen erfolgen, bspw. durch eine Verzahnung zwischen den die Coils aufnehmenden Radteilen, oder stufenlos. Die Einstellung der Rotationslage kann weiterhin manuell oder automatisch und insbesondere gesteuert erfolgen.

Zumindest ein Seilabschnitt des Seiltriebs 70, 70' kann als ein Spannseil 73 ausgebildet sein, das durchhangfrei geführt ist. Bevorzugt sind alle Seilabschnitte, die an der gesteuerten Bewegung einer Bodenfläche 9 mitwirken, als ein Spannseil 73 ausgebildet.

Ein Seiltrieb 70, 70' kann zwei (oder mehr bevorzugt paarweise) gegenläufig wirkende Seilabschnitte aufweisen, wobei ein erster Seilabschnitt mit einer ersten Bodenfläche 9 und ein zweiter Seilabschnitt mit einer in der Öffnungsrichtung B entgegengesetzt bewegbaren Bodenfläche 9 wirkverbunden sind. Auf diese Weise können die entgegengesetzten Bodenflächen 9 im Wesentlichen gleichzeitig durch einen gemeinsamen Seiltrieb 70, 70' aktuiert sein. Ein erster Seilabschnitt kann sich insbesondere von einem ersten Seilende oder Coil 71a zu einer Umlenkrolle 72 erstrecken und ein zweiter Seilabschnitt von der Umlenkrolle 72 zu einem zweiten Seilende oder Coil 71b. Mit anderen Worten können ein erster Seilabschnitt und ein zweiter Seilabschnitt jeweils Teile eines Mittelbereichs eines Seils, insbesondere eines Spannseils sein, die zwischen zwei Stützelementen des Seiltriebs erstrecken, wobei die beiden Seilabschnitte bevorzugt gemeinsam aktuiert werden. Die Seilabschnitte können auch durch unterschiedliche Seile gebildet sein, die bevorzugt gemeinsam aktuiert werden.

Mindestens eine Bodenfläche 9 kann mit zwei redundant wirkenden Seiltrieben 70, 70' und/oder mit zwei redundant wirkenden Bodenflächen-bewegungsantrieben 13 verbunden sein. Dies ist beispielhaft in den Figuren 17 bis 20 illustriert.

Besonders bevorzugt kann mindestens ein Paar von bevorzugt gegenläufig bewegbaren Bodenflächen 9 vorgesehen sein, wobei jede dieser Bodenflächen 9 mit zwei redundant wirkenden Seiltrieben und/oder zwei redundant wirkenden Bodenflächen-Bewegungsantrieben 13 wirkverbunden ist. Weiterhin können mehrere (alle) Seiltriebe und/oder Bodenflächen-Bewegungsantriebe jeweils auf ein Paar von Bodenflächen 9 wirken. Auf diese Weise wird erreicht, dass je ein Paar von Bodenflächen auf im Falle eines Ausfalls eines Seiltriebs oder eines Bodenflächen-Bewegungsantriebs noch sicher zwischen einer Schließstellung und mindestens einer Öffnungsstellung bewegbar ist.

**Bezugszeichen**

| | | |
|---|---|---|
| 1 | Flugdrohne | Flight drone |
| 2,2' | Fracht / Frachtstück | Cargo piece |
| 3 | Frachtaufnahmekörper | Cargo reception body |
| 4 | Absetzträger | Drop off carrier |
| 4a | Absetzträger | Drop off carrier |
| 4b | Absetzträger | Drop off carrier |
| 4c | Absetzträger | Drop off carrier |
| 4d | Absetzträger | Drop off carrier |
| 5 | Dockingeinrichtung | Docking device |
| 6 | Aufnahmepassage | Reception passage |
| 7 | Vertikaler Zugang | Vertical Access |
| 8 | Stützstruktur (steifer Körper) | Supporting structure (stiff body) |
| 9 | Bodenfläche | Bottom surface |
| 9a | Flacher Verschlusskörper | Flat closing body |
| 9b | L-förmiger Verschlusskörper | L-shaped closing body |
| 9c | Flacher Verschlusskörper | Flat closing body |
| 9c | L-förmiger Verschlusskörper | L-shaped closing body |
| 10 | Führungsgetriebe | Guiding gear |
| 10a | Führungsgetriebe, Linearführung | Guiding gear, linear guidance |
| 10b | Führungsgetriebe, Linearführung | Guiding gear, linear guidance |
| 10c | Führungsgetriebe, Bogenführung | Guiding gear, arc guidance |
| 10d | Führungsgetriebe, Drehführung | Guiding gear, rotational guidance |
| 11 | Zugmittel / Hebemittel | Traction means / lifting means |
| 12 | Zugmittelbefestigung | Traction means attachment |
| 13 | Bodenflächen-Bewegungsantrieb | Bottom surface movement actuator |
| 14 | Kupplungselement | Coupling element |
| 15 | Untergrund (am ersten Ziel-Ort) | Underground (at first destination) |
| 15' | Untergrund (am zweiten Ziel-Ort) | Underground (at second destination) |
| 16 | Horizontaler Zugang | Horizontal Access |
| 16' | Horizontaler Zugang | Horizontal Access |
| 17 | Führungsstruktur / Horizontalführungsstruktur | Guiding structure / Horizontally guiding structure |
| 18,18' | Sicherungsmittel | Securing means |
| 19 | Seitenwandung | Side wall |
| 20 | Haltekörper | Holdingbody |
| 30 | Rahmenstruktur (steifer Körper) | Frame structure (stiff body) |
| 30a | Erster Rahmenteil | First frame body |
| 30b | Zweiter Rahmenteil | Second frame body |
| 30c | Gelenk / Scharnier | Joint / hinge |
| 30d | Gelenk / Scharnier | Joint / hinge |
| 31 | Frachtkompartiment | Cargo compartment |
| 32 | Seitenwandungskörper | Side wall body |
| 33 | Horizontale Begrenzung | Horizontal limitation |
| 34 | Obere Begrenzung | Upper limitation |
| 35 | Thermisch isolierendes Gehäuse | Thermally insulating housing |
| 36 | Zugangsöffnung | Access opening |
| 37 | Bodenbegrenzungskörper | Bottom limitation body |
| 38 | Untere Begrenzung | Lower limitation |
| 39 | Kupplungsvorrichtung | Coupling device |
| 40 | Hüllwandung / Verkleidung | Cladding |
| 41 | Führungsstruktur / Horizontalführungsstruktur | Guiding structure / Horizontally guiding structure |
| 42 | Fixierstelle | Fixation spot |
| 43 | Deckkörper | Covering body |
| 50 | Gehäuse (steifer Körper) | Housing (stiff body) |
| 51 | Kavität | Cavity |
| 52 | Befestigungsschnittstelle | Fixation interface |
| 53 | Hebevorrichtung | Lifting device |
| 54 | Führungsmittel | Guiding means |
| 55 | Untere Grenzebene | Lower limitation plane |
| 56 | Nahbereich-Abschnitt / Andockbewegung-Wirkabschnitt | Close range section / Docking motion effective section |
| 57 | Fernbereich-Abschnitt | Far range section |
| 58 | Gehäuseöffnung | Housing opening |
| 70,70' | Seiltrieb | Rope drive |
| 71 | Angetriebenes Rad | Driven wheel |
| 71a | Erstes Coil | First coil |
| 71b | Zweites Coil | Second coil |
| 72 | Umlenkrolle | Idler pulley |
| 73 | Spannseil | Tensioned rope |
| 74 | Drehantrieb | Rotational drive |
| 75,75' | Führungsgestänge, ausziehbar / teleskopierbar | Guiding rod assembly, extendible / telescopic |
| 75a | Führende Stange | Guiding rod |
| 75b | Geführte Stange | Guided rod |
| 76 | Gleitführung | Slideway |
| 76a | Erster Schlitten | First carriage |
| 76b | Zweiter Schlitten | Second carriage |
| 77,77' | Stützstruktur | Support structure |
| 78,78' | Gegenstützmittel | Reciprocal support means |
| 100 | Drohnenkörper | Drone body |
| 101 | Tragflügel | Wing |
| 102 | Vertikalschubantrieb | Vertical thrust drive |
| 103 | Horizontalschubantrieb | Horizontal thrust drive |
| 200 | Externes Stützmittel | External support means |
| 210 | Nutzer / Person | User / Person |
| | | |
| A | Aufnahmerichtung | Reception direction |
| B | Öffnungsrichtung | Opening direction |
| C | Abladerichtung | Unloading direction |
| D | Abstand | Distance |
| G | Beladung | Loading |
| H1 | Erste Frachtabgabe | First cargo dispatch |
| H2 | Zweite Frachtabgabe | Second cargo dispatch |
| FS | Frontseite | Front face |
| LS | Längsseite | Longitudinal face |
| OP | Öffnungsposition | Open position |
| OP1 | (erste) Öffnungsposition | (first) open position |
| OP2 | (zweite) Öffnungsposition | (second) open position |
| P1 | Erste Flugphase | First flight phase |
| P2 | Zweite Flugphase | Second flight phase |
| RS | Rückseite | Rear face |
| SP | Schließposition | Closed position |
| X | (erste) Horizontalrichtung / (Haupt)-Flugrichtung | (first) horizontal direction / (Main) flight direction |
| Y | (zweite) Horizontalrichtung / Querrichtung | (second) horizontal direction / Transverse direction |
| Z | Vertikalrichtung (nach oben) | Vertical direction (upward) |
| Z' | Vertikalrichtung (nach unten) | Vertical direction (downward) |

## Patentansprüche

1. Absetzträger zur Beförderung von Fracht (2) mittels einer Flugdrohne (1), wobei
- der Absetzträger (4) eine Stützstruktur (8) und eine Aufnahmepassage (6) umfasst und dazu ausgebildet ist, mindestens ein Frachtstück (2) in der Aufnahmepassage (6) zu transportieren, und wobei
- der Absetzträger (4) ein Zugmittel (11) umfasst und/oder eine Zugmittelbefestigung (12) zur Verbindung mit einem externen Zugmittel (11) aufweist;
**dadurch gekennzeichnet, dass**
- der Absetzträger (4) dazu ausgebildet ist, im vorgesehenen Beladungszustand einen Frachtaufnahmekörper (3) in der Aufnahmepassage (6) aufzunehmen und relativ zu der Stützstruktur (8) zu fixieren, wobei der Frachtaufnahmekörper (3) bei der Abgabe des mindestens einen Frachtstücks (2) an dem Absetzträger (4) verbleibt, und wobei das mindestens eine Frachtstück (2) von dem Frachtaufnahmekörper (3) in Horizontalrichtung (X, Y) umgeben und bevorzugt ausschließlich horizontal geführt ist; und wobei
- der Absetzträger (4) einen nach unten weisenden vertikalen Zugang (7) zu der Aufnahmepassage (6) aufweist, wobei der vertikale Zugang (7) durch mindestens eine gesteuert bewegbare Bodenfläche (9) begrenzt ist.

2. Absetzträger nach dem vorhergehenden Anspruch, wobei der Absetzträger (4) mindestens einen horizontalen Zugang (16, 16') zu der Aufnahmepassage (6) aufweist, wobei ein Frachtaufnahmekörper (3) durch den horizontalen Zugang (16, 16') in die Aufnahmepassage (6) einführbar ist, wobei insbesondere das mindestens eine Frachtstück (2) durch die Einführung des Frachtaufnahmekörpers (3) mitbewegbar ist.

3. Absetzträger nach einem der vorhergehenden Ansprüche, wobei die Aufnahmepassage (6) eine Führungsstruktur (17), insbesondere eine Horizontalführungsstruktur (17) umfasst, die den Frachtaufnahmekörper relativ zu dem Absetzträger
- in mindestens oder genau einer Horizontalrichtung (X, Y) beweglich führt, und optional zusätzlich
- in Vertikalrichtung (Z) zumindest nach unten festlegt und insbesondere abstützt.

4. Absetzträger nach einem der vorhergehenden Ansprüche, wobei der Absetzträger (4) ein steuerbares Sicherungsmittel (18) aufweist, das
- den horizontalen Zugang (16, 16') zu der Aufnahmepassage (6) zeitweise sperrt oder freigibt; UND/ODER
- einen Frachtaufnahmekörper (3) in einer quer zu dem horizontalen Zugang (16, 16') orientierten Aufnahmerichtung (A) zeitweise fixiert oder freigibt;

5. Absetzträger nach einem der vorhergehenden Ansprüche, wobei der Frachtaufnahmekörper (3) eine Rahmenstruktur (30) umfasst, die dazu ausgebildet ist, den Frachtaufnahmekörper (3) an einer Führungsstruktur (17) des Absetzträgers festzulegen, insbesondere an der Führungsstruktur (17) der Aufnahmepassage (6), und wobei der Frachtaufnahmekörper (3) mindestens ein Frachtkompartiment (31) umfasst, in dem mindestens ein Frachtstück (2) aufnehmbar ist, und wobei das mindestens eine Frachtkompartiment (31) in seiner horizontalen Erstreckung und/oder in seiner horizontalen Lage relativ zu der Rahmenstruktur (30) derart einstellbar und fixierbar ist, dass eine Abweichung der Ist-Schwerpunktlage der Fracht gegenüber einer Referenz-Schwerpunktlage justierbar ist.

6. Absetzträger nach einem der vorhergehenden Ansprüche, wobei mindestens zwei Frachtkompartimente (31, 31') vorliegen und derart einstellbar und fixierbar sind, dass eine zwei- oder mehrfache Schwerpunktlagen-Optimierung ermöglicht ist, insbesondere eine erste Schwerpunktlagen-Optimierung für die Gesamtfracht (2 + 2') und eine weitere Schwerpunktlagen-Optimierung für eine Teilfracht (2 / 2'), wobei insbesondere die Gesamtfracht (2 + 2') in einer ersten Zeitphase (P1) bis zu einer ersten Frachtabgabe (H1) zu erwarten ist und die Teilfacht (2 / 2') in einer weiteren Zeitphase (P2) bis zu einer weiteren Frachtabgabe (H2).

7. Absetzträger nach einem der vorhergehenden Ansprüche, wobei der Frachtaufnahmekörper (3) mindestens einen beweglichen Seitenwandungskörper (32) umfasst, der im vorgesehenen Beladungszustand eine horizontale Begrenzung (33) des mindestens einen Frachtkompartiments (31) bildet.

8. Absetzträger nach einem der vorhergehenden Ansprüche, wobei das mindestens eine Frachtstück (2) in einem Frachtaufnahmekompartiment durch Beladung in einer Vertikalrichtung (Z) einbringbar ist, insbesondere von oben her.

9. Dockingeinrichtung zur Aufnahme eines Lastenträgers an einer Flugdrohne (1), wobei die Dockingeinrichtung (5) umfasst:
- Ein Gehäuse (50) mit einer in Vertikalrichtung nach unten (Z') geöffneten Kavität (51);
- Eine Befestigungsschnittstelle (52) zur Verbindung des Gehäuses (50) mit der Flugdrohne;
- Eine steuerbare Hebevorrichtung (53), die dazu ausgebildet ist, den Lastenträger mittels eines Zugmittels (11) in Vertikalrichtung (Z) nach oben in die Kavität (51) zu bewegen oder in Vertikalrichtung nach unten (Z') aus der Kavität (51) in Richtung eines Untergrunds (15) abzulassen,
und wobei die Dockingeinrichtung (5) Führungsmittel (54) umfasst, die dazu ausgebildet sind,
- den Lastenträger zumindest bei der Aufnahme in die Kavität (51) und zumindest hinsichtlich seiner Drehposition um die Hochachse derart zu führen, dass die Ist-Drehposition des Lastenträgers an eine vorgesehene Referenz-Drehposition angenähert oder angeglichen wird, und
- den Lastenträger in der aufgenommenen Position innerhalb der Kavität (51) in Horizontalrichtung festzulegen, und
**dadurch gekennzeichnet, dass** die Dockingeinrichtung den Lastenträger umfasst, wobei der Lastenträger ein Absetzträger (4) nach einem der vorhergehenden Ansprüche ist.

10. Dockingeinrichtung nach einem der vorhergehenden Ansprüche, wobei das Gehäuse (50) der Dockingeinrichtung (5) eine in der horizontalen Haupt-Flugrichtung (X) orientierte Frontseite (FS) und/oder eine entgegen der Haupt-Flugrichtung (X) orientierte Rückseite (RS) hat, wobei insbesondere
- die Frontseite (FS) und/oder die Rückseite (RS) die Kavität (51) in einer Horizontalrichtung (X) bedeckt; UND/ODER wobei
- die Frontseite (FS) und/oder die Rückseite (RS) eine zur Haupt-Flugrichtung (X) gekrümmte Stromlinienform aufweist, die insbesondere eine Reduzierung des Strömungswiderstands bewirkt, weiter insbesondere eine Reduzierung des Strömungswiderstands für eine Luftströmung von der Frontseite (FS) über eine untere Grenzebene (55) der Kavität (51) und/oder für eine Luftströmung von einer unteren Grenzebene (55) der Kavität (51) zu der Rückseite (FS) begünstigt; UND/ODER wobei
- das Gehäuse (50) an zumindest einer der quer zur Haupt-Flugrichtung (X) orientierten horizontalen Längsseiten (LS) eine unterbrochene Wandung aufweist, die eine Gehäuse-Öffnung (58) zu der Kavität (51) bildet.

11. Frachttransportvorrichtung zum Transport von Fracht mittels einer Flugdrohne, **dadurch gekennzeichnet, dass** die Frachttransportvorrichtung zumindest zwei Elemente aus der folgenden Gruppe umfasst:
- Einen Absetzträger gemäß einem der vorhergehenden Ansprüche;
- Einen Frachtaufnahmekörper;
- Eine Dockingeinrichtung gemäß einem der vorhergehenden Ansprüche.

12. Flugdrohne zum Transport von Fracht, **dadurch gekennzeichnet, dass** die Flugdrohne (1) zumindest ein Element aus der folgenden Gruppe umfasst:
- Einen Absetzträger (4) gemäß einem der vorhergehenden Ansprüche;
- Eine Dockingeinrichtung (5) gemäß einem der vorhergehenden Ansprüche, wobei die Dockingeinrichtung (5) insbesondere in den Drohnenkörper (100) der Flugdrohne (1) stromlinienförmig integriert ist.

13. Beladeverfahren zur Einbringung mindestens eines Frachtstücks (2) in eine Flugdrohnen-Frachttransportvorrichtung, wobei die Flugdrohnen-Frachttransportvorrichtung an einer steuerbaren Flugdrohne (1) angeordnet ist und zumindest einen Absetzträger gemäß einem der vorhergehenden Ansprüche umfasst, **gekennzeichnet durch** die folgenden Schritte:
- Bereitstellen des mindestens einen Frachtstücks (2) in einem Frachtkompartiment (31) eines Frachtaufnahmekörpers (3);
- Einführen des Frachtaufnahmekörpers (3) in die Aufnahmepassage (6) des Absetzträgers in einer Horizontalrichtung (X, Y), wobei das Frachtstück (2) durch die Bewegung des Frachtaufnahmekörpers (3) in der Horizontalrichtung (X, Y) mitbewegt wird und wobei der nach unten weisende Zugang (7) zu der Aufnahmepassage (6) durch mindestens eine gesteuert bewegbare Bodenfläche (9) begrenzt ist, und wobei insbesondere das mindestens eine Frachtstück (2) innerhalb der Aufnahmepassage (6) in der Vertikalrichtung nach unten (Z') auf der mindestens einen gesteuert bewegbaren Bodenfläche (9) abgestützt wird.

14. Flugtransportverfahren zur Beförderung mindestens eines Warenstücks (2) mit einer Flugdrohne (1), **gekennzeichnet durch** die folgenden Schritte:
- Bereitstellen des mindestens einen Frachtstücks (2) in der Aufnahmepassage (6) eines Absetzträgers (3), wobei der Absetzträger (3) nach einem der vorhergehenden Ansprüche ausgebildet ist, und wobei das mindestens eine Frachtstück (2) innerhalb der Aufnahmepassage (6) in der Horizontalrichtung (X, Y) positioniert und geführt ist, und wobei das mindestens eine Frachtstück (2) innerhalb der Aufnahmepassage (6) in der Vertikalrichtung nach unten (Z') auf mindestens einer gesteuert bewegbaren Bodenfläche (9) abgestützt ist;
- Aufnehmen des Absetzträgers (6) in einer Kavität (51) an der Flugdrohne (1);
- Gesteuertes Bewegen der Flugdrohne (1) zu einem Ziel-Ort und Halten der Flugdrohne (1) in einem Schwebeflugmodus mit einem Abstand oberhalb eines Untergrunds (15) am Ziel-Ort;
- Ablassen des Absetzträgers (6) in der Vertikalrichtung (Z) zur Annäherung an den Untergrund (15).

15. Frachtabgabeverfahren zur Ablage mindestens eines Frachtstücks (2) an einem Ziel-Ort, **gekennzeichnet durch** die folgenden Schritte:
- Bereitstellen eines Absetzträgers (3) mittels einer Flugdrohne (1) an einem Ziel-Ort, wobei die Flugdrohne (1) im Schwebeflugmodus mit vertikalem Abstand über dem Untergrund (15) am Ziel-Ort gehalten wird und wobei der Absetzträger (3) nach einem der vorhergehenden Ansprüche ausgebildet und in Vertikalrichtung nach unten (Z') an den Untergrund (15) angenähert ist.
- Gesteuertes Bewegen mindestens einer Bodenfläche (9), die einen nach unten weisenden vertikalen Zugang (7) zu einer Aufnahmepassage (6) des Absetzträgers (3) begrenzt, in eine Öffnungsposition (OP1, OP2), sodass mindestens ein innerhalb der Aufnahmepassage (6) angeordnetes Frachtstück (2) jegliche Schwerkraftabstützung verliert und durch den vertikalen Zugang (7) in Richtung des Untergrunds (15) aus der Aufnahmepassage (6) fällt, wobei der Frachtaufnahmekörper (3) bei der Abgabe des mindestens einen Frachtstücks (2) an dem Absetzträger (4) verbleibt, sodass ausschließlich das mindestens eine Frachtstück (2) abgegeben wird.
